# EUROPEAN PATENT APPLICATION

(11) **EP 4 589 980 A1**
(43) Date of publication of application: **23.07.2025**
(21) Application number: 23856484.3
(22) Date of filing: 10.08.2023
(51) Int. Cl.: H04N 23/951

(54) **PHOTOGRAPHING METHOD AND RELATED APPARATUS**

(30) Priority: 26.08.2022 CN 202211037891
(71) Applicant: Huawei Technologies Co., Ltd., Shenzhen, Guangdong 518129 (CN)
(72) Inventor: WU, Guoliang, Shenzhen, Guangdong 518129 (CN); QIU, Hongbing, Shenzhen, Guangdong 518129 (CN); QIN, Yi, Shenzhen, Guangdong 518129 (CN)
(74) Representative: Huawei European IPR
(86) International application number: PCT/CN2023/112243
(87) International publication number: WO 2024/041394

(57) **Abstract**

This application discloses an image shooting method and a related apparatus. After enabling a "group photo" function for a selected picture including an object A, an electronic device starts a camera application, displays indication information of the picture on a preview interface, and also displays an image captured by a camera of the electronic device. Then the electronic device may receive a photographing instruction input by a user, and fit the picture and the image captured by the camera into a composite image that includes both the object A and an object B. In the method, high-quality group photographing of the object A and the object B can be implemented without the help of another device or another person.

## Description

This application claims priority to Chinese Patent Application No. 202211037891.9, filed with the China National Intellectual Property Administration on August 26, 2022 and entitled "IMAGE SHOOTING METHOD AND RELATED APPARATUS", which is incorporated herein by reference in its entirety.

### TECHNICAL FIELD

This application relates to the field of terminal technologies, and in particular, to an image shooting method and a related apparatus.

### BACKGROUND

When a plurality of persons travel together, a group photo usually needs to be taken. There are the following methods for taking a group photo of a plurality of persons.
1. A passerby is asked to take a group photo. This method not only causes trouble to others, but also may lead to average image shooting effect because the passerby is not familiar with an image shooting device.
2. A photo is taken by using a selfie stick or a tripod or by directly placing an image shooting device on the ground. However, the selfie stick causes an increase in load of a user during traveling, an image shooting distance cannot be controlled, and definition of image shooting of a front-facing camera is low. The tripod also causes an increase in load, real-time preview cannot be achieved, and an image shooting device may be damaged. When the image shooting device is placed on the ground, real-time preview cannot be achieved, and an image shooting distance cannot be controlled.
3. After photos of a plurality of persons are taken separately, a group photo is generated later by using photographing software. A manner of post-producing a group photo is time-consuming, does not support real-time preview of the group photo, and has average group photographing effect.

### SUMMARY

This application provides an image shooting method and a related apparatus, to implement high-quality group photographing of a plurality of objects without the help of another device or another person.

According to a first aspect, an embodiment of this application provides an image shooting method. The method is applied to an electronic device. The method may include: The electronic device starts a gallery application, and displays a first user interface, where a first picture is displayed on the first user interface, and the first picture includes a first object. The electronic device receives a first operation for the first picture. The electronic device starts a camera application, and displays a second user interface, where a preview frame is displayed on the second user interface, and an image captured by a camera of the electronic device and indication information of the first picture are displayed in the preview frame. The electronic device receives a second operation for photographing. The electronic device stores a second picture, where the second picture is obtained by fitting the image captured by the camera and the first picture, the image captured by the camera includes a second object, and the second picture includes the first object and the second object.

According to the method provided in the first aspect, the electronic device may invoke the camera application by using the gallery application, and may take a group photo of the first object and the second object without the help of another device or another person. In addition, during group photographing, a relative location between the first object and the second object may be further previewed and adjusted in real time, and an image shooting distance and a camera used for image shooting may be further flexibly adjusted, to achieve high-quality group photographing effect. In addition, the method has low operation difficulty, takes a short time, and is convenient, and can support continuous photographing of a large quantity of group photos.

With reference to the first aspect, in some implementations, the first object or the second object is any one of the following: a person, an animal, a landmark, a building, or a doll.

With reference to the first aspect, in some implementations, there may be a plurality of first objects or second objects.

With reference to the first aspect, in some implementations, the indication information of the first picture displayed by the electronic device in the preview frame may be a first picture that has transparency or is blurred. In this way, a user can not only view the first picture in the preview frame, but also view, through the first picture that is blurred or has transparency, the image that is captured by the camera and that is displayed by the electronic device, to preview, in real time, a relative location between an object in the first picture and an object in the image captured by the camera.

With reference to the first aspect, in some implementations, after receiving the second operation, the electronic device may obtain the second picture through fitting in any one of the following manners.

Manner 1: An area, in which the second object is located, in the image captured by the camera is fitted to the first picture to obtain the second picture.

During specific implementation, the electronic device recognizes the second object in the image captured by the camera; determines, in the image captured by the camera, a primary area including the second object, where the primary area is an area determined by using the second object as a reference; determines a co-location area in the first picture, where a correlation between a part in the first picture other than the co-location area and a part in the image captured by the camera other than the primary area is greater than a second value; and fits the primary area to the co-location area in the first picture to obtain the second picture.

Manner 2: An area, in which the first object is located, in the first picture is fitted to the image captured by the camera to obtain the second picture.

The electronic device recognizes the first object in the first picture; determines, in the first picture, a primary area including the first object, where the primary area is an area determined by using the first object as a reference; determines a co-location area in the image captured by the camera, where a correlation between a part in the image captured by the camera other than the co-location area and a part in the first picture other than the primary area is greater than a second value; and fits the primary area to the co-location area in the image captured by the camera to obtain the second picture.

In the manner 1 or the manner 2, the primary area may be an area obtained through outward extension by a distance of a first value by using a corresponding object (for example, the first object or the second object) as a reference, or an area that is obtained through extension toward a surrounding area and that has a color or a pixel similar to or same as a color or a pixel of a corresponding object. The first value may be preset by the electronic device. The first value may be related to a model of a camera with which the electronic device is equipped.

The primary area is determined by using the corresponding object (for example, the first object or the second object) as a reference. This can not only ensure integrity of an object in the primary area, but also avoid excessive extension of a range, to ensure effect of subsequent fitting.

In the manner 1 or the manner 2, a location of the co-location area in the first picture is the same as a location of the primary area in the image captured by the camera. In this way, effect of performing adjustment by the user in real time based on content in the preview frame can be directly applied to final fitting effect, so that the user can adjust group photographing effect in real time.

In the manner 1 or the manner 2, a size or a shape of the co-location area in the first picture is the same as or different from a size or a shape of the primary area in the image captured by the camera.

With reference to the first aspect, in some implementations, the second picture is a frame of image with highest quality among composite images obtained by separately fitting a plurality of frames of images captured by the camera and the first picture, the plurality of frames of images captured by the camera include images captured by the camera at a moment at which the electronic device receives the second operation and an earlier moment, and a quantity of the plurality of frames of images is preset by the electronic device. In this way, high-quality group photographing effect can be ensured.

With reference to the first aspect, in some implementations, the second picture is a frame of composite image obtained by fitting the first picture and an image captured by the camera at a moment at which the second operation is received.

With reference to the first aspect, in some implementations, a first control is displayed on the first user interface, and before the electronic device receives the first operation for the first picture, the method further includes: The electronic device receives a user operation performed on the first control. The electronic device displays a second control on the first user interface, where the first operation includes a user operation performed on the second control.

With reference to the first aspect, in some implementations, after the electronic device stores the second picture, the electronic device may receive a third operation for viewing the second picture, and display the second picture. This is equivalent to that, after a group photo of the first object and the second object is taken, the user may further view the group photo on the electronic device.

According to a second aspect, an embodiment of this application provides an image shooting method. The method is applied to an electronic device. The method may include: The electronic device starts a gallery application, and displays a first user interface, where a first picture is displayed on the first user interface, and the first picture includes a first object. The electronic device receives a first operation for the first picture. The electronic device starts a camera application, and displays a second user interface, where a preview frame is displayed on the second user interface, a composite image is displayed in the preview frame, the composite image is obtained by fitting an image captured by a camera of the electronic device and the first picture, and the image captured by the camera includes a second object. The electronic device receives a second operation for photographing. The electronic device stores a second picture, where the second picture is a composite image displayed in the preview frame when the second operation is received, and the second picture includes the first object and the second object.

According to the method provided in the second aspect, the electronic device may invoke the camera application by using the gallery application, may display group photographing effect for a user in the preview frame in real time to enable the user to more intuitively feel the group photographing effect, and may take a group photo of the first object and the second object without the help of another device or another person. In addition, during group photographing, a relative location between the first object and the second object may be further previewed and adjusted in real time, and an image shooting distance and a camera used for image shooting may be further flexibly adjusted, to achieve high-quality group photographing effect. In addition, the method has low operation difficulty, takes a short time, and is convenient, and can support continuous photographing of a large quantity of group photos.

With reference to the second aspect, in some implementations, the first object or the second object is any one of the following: a person, an animal, a landmark, a building, or a doll.

With reference to the second aspect, in some implementations, there may be a plurality of first objects or second objects.

With reference to the second aspect, in some implementations, the electronic device may obtain, through fitting in any one of the following manners, the composite image displayed in the preview frame.

Manner 1: An area, in which the second object is located, in the image captured by the camera is fitted to the first picture to obtain the second picture.

Manner 2: An area, in which the first object is located, in the first picture is fitted to the image captured by the camera to obtain the second picture.

For specific implementations and technical effect of the manner 1 and the manner 2, refer to the manner of generating the second picture in the first aspect. Details are not described herein again.

With reference to the second aspect, in some implementations, a first control is displayed on the first user interface, and before receiving the first operation for the first picture, the electronic device may further receive a user operation performed on the first control, and display a second control on the first user interface, where the first operation includes a user operation performed on the second control.

With reference to the second aspect, in some implementations, after the electronic device stores the second picture, the electronic device may receive a third operation for viewing the second picture, and display the second picture. This is equivalent to that, after a group photo of the first object and the second object is taken, the user may further view the group photo on the electronic device.

According to a third aspect, an embodiment of this application provides an image shooting method. The method is applied to an electronic device. The method may include: The electronic device displays a second user interface, where a preview frame and a third control are displayed on the second user interface, and an image captured by a camera of the electronic device is displayed in the preview frame. The electronic device detects a fourth operation performed on the third control. The electronic device displays one or more pictures. The electronic device detects a fifth operation performed on a first picture of the one or more pictures, where the first picture includes a first object. The electronic device displays, in the preview frame on the second user interface, the image captured by the camera of the electronic device and indication information of the first picture. The electronic device receives a second operation for photographing. The electronic device stores a second picture, where the second picture is obtained by fitting the image captured by the camera and the first picture, the image captured by the camera includes a second object, and the second picture includes the first object and the second object.

According to the method provided in the third aspect, the electronic device may enable a group photo function by using a preview interface, and may take a group photo of the first object and the second object without the help of another device or another person. In addition, during group photographing, a relative location between the first object and the second object may be further previewed and adjusted in real time, and an image shooting distance and a camera used for image shooting may be further flexibly adjusted, to achieve high-quality group photographing effect. In addition, the method has low operation difficulty, takes a short time, and is convenient, and can support continuous photographing of a large quantity of group photos.

With reference to the third aspect, the second user interface (namely, the preview interface) may be provided by a camera application, or may be an interface provided by another application by invoking a camera interface. The another application may be, for example, a social application or a shopping application. This is equivalent to that the group photo function may be enabled by using the camera application or the another application.

For the first object, the second object, and the indication information of the first picture in the third aspect, refer to related descriptions in the first aspect.

With reference to the third aspect, in some implementations, for a manner and technical effect of obtaining the second picture by the electronic device through fitting, refer to related descriptions in the first aspect.

With reference to the third aspect, in some implementations, the second picture is a frame of image with highest quality among composite images obtained by separately fitting a plurality of frames of images captured by the camera and the first picture, the plurality of frames of images captured by the camera include images captured by the camera at a moment at which the electronic device receives the second operation and an earlier moment, and a quantity of the plurality of frames of images is preset by the electronic device. In this way, high-quality group photographing effect can be ensured.

With reference to the third aspect, in some implementations, the second picture is a frame of composite image obtained by fitting the first picture and an image captured by the camera at a moment at which the second operation is received.

With reference to the third aspect, in some implementations, after the electronic device stores the second picture, the electronic device may receive a third operation for viewing the second picture, and display the second picture. This is equivalent to that, after a group photo of the first object and the second object is taken, the user may further view the group photo on the electronic device.

According to a fourth aspect, an embodiment of this application provides an image shooting method. The method is applied to an electronic device. The method may include: The electronic device displays a second user interface, where a preview frame and a third control are displayed on the second user interface, and an image captured by a camera of the electronic device is displayed in the preview frame. The electronic device detects a fourth operation performed on the third control. The electronic device displays one or more pictures. The electronic device detects a fifth operation performed on a first picture of the one or more pictures, where the first picture includes a first object. The electronic device displays a composite image in the preview frame on the second user interface, where the composite image is obtained by fitting the image captured by the camera of the electronic device and the first picture, and the image captured by the camera includes a second object. The electronic device receives a second operation for photographing. The electronic device stores a second picture, where the second picture is a composite image displayed in the preview frame when the second operation is received, and the second picture includes the first object and the second object.

According to the method provided in the fourth aspect, the electronic device may enable a group photo function by using a preview interface, may display group photographing effect for a user in the preview frame in real time to enable the user to more intuitively feel the group photographing effect, and may take a group photo of the first object and the second object without the help of another device or another person. In addition, during group photographing, a relative location between the first object and the second object may be further previewed and adjusted in real time, and an image shooting distance and a camera used for image shooting may be further flexibly adjusted, to achieve high-quality group photographing effect. In addition, the method has low operation difficulty, takes a short time, and is convenient, and can support continuous photographing of a large quantity of group photos.

With reference to the fourth aspect, in some implementations, the second user interface (namely, the preview interface) may be provided by a camera application, or may be an interface provided by another application by invoking a camera interface. The another application may be, for example, a social application or a shopping application. This is equivalent to that the group photo function may be enabled by using the camera application or the another application.

With reference to the fourth aspect, in some implementations, the first object or the second object is any one of the following: a person, an animal, a landmark, a building, or a doll.

With reference to the fourth aspect, in some implementations, there may be a plurality of first objects or second objects.

With reference to the fourth aspect, in some implementations, the electronic device may obtain, through fitting in any one of the following manners, the composite image displayed in the preview frame.

Manner 1: An area, in which the second object is located, in the image captured by the camera is fitted to the first picture to obtain the second picture.

Manner 2: An area, in which the first object is located, in the first picture is fitted to the image captured by the camera to obtain the second picture.

For specific implementations and technical effect of the manner 1 and the manner 2, refer to the manner of generating the second picture in the first aspect. Details are not described herein again.

With reference to the fourth aspect, in some implementations, after the electronic device stores the second picture, the electronic device may receive a third operation for viewing the second picture, and display the second picture. This is equivalent to that, after a group photo of the first object and the second object is taken, the user may further view the group photo on the electronic device.

According to a fifth aspect, an embodiment of this application provides an electronic device, including a memory and one or more processors. The memory is coupled to the one or more processors. The memory is configured to store computer program code. The computer program code includes computer instructions. The one or more processors invokes/invoke the computer instructions to enable the electronic device to perform the method performed by the electronic device in any implementation in the first aspect, the second aspect, the third aspect, or the fourth aspect.

According to a sixth aspect, an embodiment of this application provides a computer-readable storage medium, including instructions. When the instructions are run on an electronic device, the electronic device is enabled to perform the method performed by the electronic device in any implementation in the first aspect, the second aspect, the third aspect, or the fourth aspect.

According to a seventh aspect, an embodiment of this application provides a computer program product. When the computer program product is run on a computer, the computer is enabled to perform the method performed by the electronic device in any implementation in the first aspect, the second aspect, the third aspect, or the fourth aspect.

According to an eighth aspect, an embodiment of this application provides a chip system. The chip system includes at least one processor, configured to implement the method performed by the electronic device in any implementation in the first aspect, the second aspect, the third aspect, or the fourth aspect.

According to the technical solutions provided in this application, an electronic device may take a group photo of a first object and a second object without the help of another device or another person. In addition, during group photographing, a relative location between the first object and the second object may be further previewed and adjusted in real time, and an image shooting distance and a camera used for image shooting may be further flexibly adjusted, to achieve high-quality group photographing effect. In addition, the method has low operation difficulty, takes a short time, and is convenient, and can support continuous photographing of a large quantity of group photos.

### BRIEF DESCRIPTION OF DRAWINGS

FIG. 1A is a diagram of a hardware structure of an electronic device 100 according to an embodiment of this application;
FIG. 1B is a diagram of a software structure of an electronic device 100 according to an embodiment of this application;
FIG. 1C is a diagram of another software structure of an electronic device 100 according to an embodiment of this application;
FIG. 2A to FIG. 2H show a group of user interfaces for group photographing that are provided by an electronic device 100 according to an embodiment of this application;
FIG. 3A to FIG. 3F show another group of user interfaces for group photographing that are provided by an electronic device 100 according to an embodiment of this application;
FIG. 4A and FIG. 4B show user interfaces provided by a gallery application after an electronic device 100 stores a picture obtained through fitting according to an embodiment of this application;
FIG. 5 is a flowchart of an image shooting method according to an embodiment of this application; and
FIG. 6A and FIG. 6B show examples of several image processing processes according to an embodiment of this application.

### DESCRIPTION OF EMBODIMENTS

The following clearly describes the technical solutions in embodiments of this application in detail with reference to the accompanying drawings. In descriptions of embodiments of this application, "/" indicates or, unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, in descriptions of embodiments of this application, "a plurality of" means two or more than two.

The terms "first" and "second" used below are merely intended for description, and shall not be understood as an indication or implication of relative importance or an implicit indication of a quantity of indicated technical features. Therefore, a feature limited by "first" or "second" may explicitly or implicitly include one or more features. In descriptions of embodiments of this application, "a plurality of" means two or more than two, unless otherwise specified.

The term "user interface (user interface, UI)" in the following embodiments of this application is a medium interface for interaction and information exchange between an application or an operating system and a user. The user interface implements conversion between an internal form of information and a form acceptable to the user. The user interface is source code written in a specific computer language, for example, Java or an extensible markup language (extensible markup language, XML). The interface source code is parsed and rendered on an electronic device, and is finally presented as user-recognizable content. The user interface is usually represented in a form of a graphical user interface (graphical user interface, GUI), and is a user interface that is related to a computer operation and that is displayed in a graphic manner. The user interface may be a visual interface element, for example, a text, an icon, a button, a menu, a tab, a text box, a dialog box, a status bar, a navigation bar, or a widget, that is displayed on a display of the electronic device.

The following embodiments of this application provide an image shooting method and a related apparatus. In the image shooting method, an electronic device may enable a "group photo" function for a selected picture including an object A, and then start a camera application, display, on a preview interface provided by the camera application, the picture that has transparency or is blurred, and also display an image captured by a camera of the electronic device. When the image captured by the camera includes an object B, the electronic device may receive a photographing instruction input by a user, and then may fit the picture and the image captured by the camera to generate a composite image including both the objectA and the object B.

The object A or the object B may include but is not limited to a person, an animal, a landmark, a building, a doll, and the like. There may be a plurality of objects A or objects B.

In the image shooting method, a group photo of the objectA and the object B can be taken. In the method, a group photo may be taken without the help of another device or another person. In addition, during group photographing, a relative location between the object B and the object A may be further previewed and adjusted in real time, and an image shooting distance and a camera used for image shooting may be further flexibly adjusted, to achieve high-quality group photographing effect. In addition, the method has low operation difficulty, takes a short time, and is convenient, and can support continuous photographing of a large quantity of group photos.

The image shooting method may be applied to a scenario in which a group photo needs to be taken. The scenario includes but is not limited to the following: A plurality of group photos of a same person at a same place are taken; and a group photo of a new person and a person in an old photo is taken, to implement group photographing of a plurality of persons at a same place at different time.

In some implementations, the electronic device may extract an area, in which the object B is located, in the image captured by the camera, and fit the area into the picture including the object A, while keeping a remaining part of the picture unchanged, to generate the composite image including both the objectA and the object B. Through image fitting, the object B can be smoothly and naturally blended into a corresponding area in the picture including the object A, to achieve natural and high-quality group photographing effect. In some other implementations, the electronic device may alternatively extract an area, in which the object A is located, in the picture, and fit the area into the image captured by the camera. For a specific manner of generating the composite image, refer to detailed descriptions in subsequent method embodiments.

In some implementations, starting from a moment at which the photographing instruction is received, the electronic device may select N frames of images captured by the camera at the moment and an earlier moment, separately fit the N frames of images and the picture including the object A to obtain N frames of composite images, and then select a frame with best quality from the N frames of composite images and store the frame as a group photographing result. In this way, an optimal frame can be selected from a plurality of frames of composite images as a group photographing result, to achieve high-quality group photographing effect. In addition, in the method, a delay between time at which the user sees group photographing effect on a preview interface and time at which the user inputs the photographing instruction is further considered, to avoid using a composite image corresponding to the moment at which the photographing instruction is received as final group photographing effect.

In some implementations, after starting the camera application, the electronic device may alternatively directly fit the image captured by the camera and the selected picture including the object A, and directly display the composite image on the preview interface provided by the camera application.

In embodiments of this application, the "group photo" function is provided by the electronic device. The function supports the electronic device in displaying, on the preview interface provided by the camera application, the picture that includes the object A and that has transparency or is blurred, and also displaying the image captured by the camera of the electronic device. The electronic device receives the photographing instruction input by the user, and fits the picture and the image captured by the camera to generate the composite image including both the object A and the object B. Alternatively, the "group photo" function supports the electronic device in directly fitting the image captured by the camera and the picture including the object A, and directly displaying the composite image on the preview interface provided by the camera application.

The "group photo" function is merely a term used in embodiments of this application, a meaning represented by the term is described in embodiments, and a name of the function does not constitute any limitation on embodiments. For example, the "group photo" function may also be referred to as another term, for example, a "group photographing" function, multi-person group photographing, or a multi-person group photo.

**The following first describes an electronic device provided in embodiments** of this **application.**

The electronic device provided in embodiments of this application is equipped with a camera, and may include but is not limited to a smartphone, a tablet computer, a dedicated camera (for example, a single-lens reflex camera or a compact camera), an augmented reality (augmented reality, AR) device, a virtual reality (virtual reality, VR) device, an artificial intelligence (artificial intelligence, AI) device, a wearable device (for example, a smartwatch or smart glasses), a personal digital assistant (personal digital assistant, PDA), and the like. An example embodiment of the electronic device includes but is not limited to a portable electronic device on which iOS^{®}, Android^{®}, Harmony^{®}, Windows^{®}, Linux, or another operating system is installed. The electronic device may alternatively be another portable electronic device, for example, a laptop (Laptop) computer.

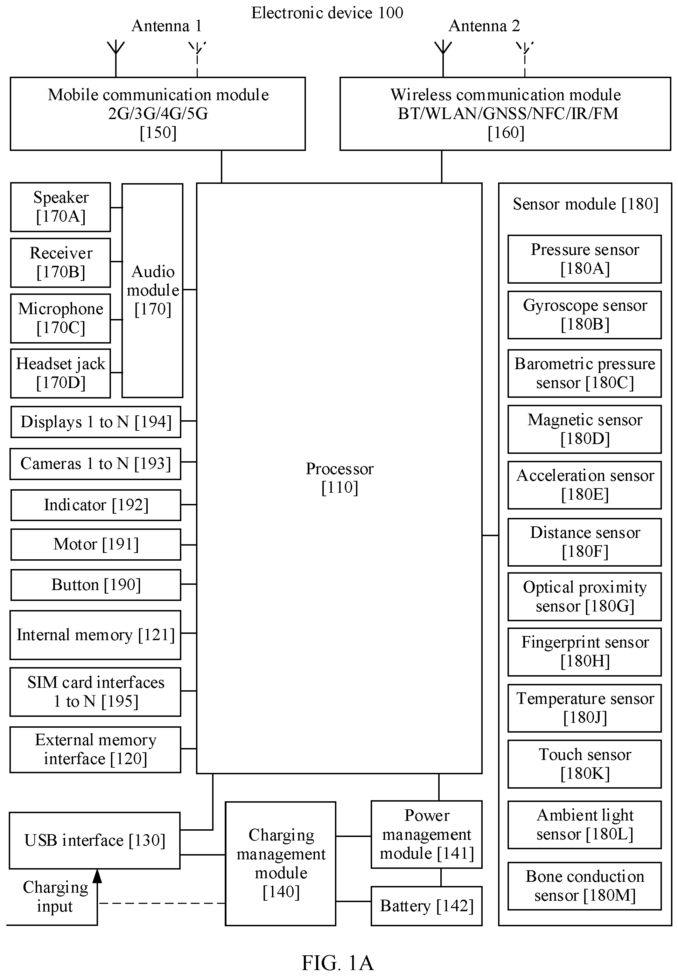

FIG. 1A is a diagram of a structure of an electronic device 100 according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to control instruction fetching and instruction execution.

A memory may be further disposed in the processor 110 to store instructions and data. In some embodiments, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and therefore improves system efficiency.

In some embodiments, the processor 110, for example, the controller or the GPU, may be configured to perform transparency processing or blurring on a picture including an object A, and superpose a processed picture and an image captured by the camera 193 to obtain, through composition, a preview image to be displayed in a viewfinder frame.

In some embodiments, the processor 110, for example, the controller or the GPU, may be configured to fit an image captured by the camera and a picture including an object A, to generate a preview image to be displayed in a viewfinder frame, so that group photographing effect can be presented to a user. For a specific implementation of the fitting operation performed by the processor 110, refer to detailed descriptions in subsequent method embodiments.

For ease of use, the electronic device usually performs image shooting in a user handheld mode. However, a picture captured in the user handheld mode usually shakes. In some embodiments, the processor 110, for example, the controller or the GPU, may be further configured to: in a group photographing scenario, perform image stabilization on an image captured by the camera, and then superpose or fit an image that is obtained through image stabilization and that corresponds to the camera and a picture including an object A, to provide a preview image for the display 194 to display.

A wireless communication function of the electronic device 100 may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 150 may provide a solution applied to the electronic device 100 for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor, and then a processed signal is transmitted to the application processor. The application processor outputs a sound signal through an audio device (not limited to the speaker 170A, the receiver 170B, and the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution applied to the electronic device 100 for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 160 may be one or more components integrating at least one communications processor module. The wireless communication module 160 receives an electromagnetic wave through the antenna 2, performs demodulation and filtering on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 implements a display function through the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs that execute program instructions to generate or change displayed information.

The display 194 is configured to display an image, a video, or the like. The display 194 includes a display panel. The display panel may be a liquid crystal display (liquid crystal display, LCD). The display panel may alternatively be an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device may include one or N displays 194, where N is a positive integer greater than 1.

In some implementations, in a group photographing scenario, the display 194 may display a preview interface provided by a camera application, display, on the preview interface, a picture that includes an object A and that has transparency or is blurred, and also display an image captured by the camera 193 of the electronic device.

In some other implementations, in a group photographing scenario, the display 194 may display a composite image obtained by the processor 110 by fitting an image captured by the camera and a picture including an object A, so that group photographing effect can be presented to a user.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and color temperature of an image shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The electronic device 100 may have a plurality of cameras 193, for example, a front-facing camera and a rear-facing camera. There may be a plurality of front-facing cameras and a plurality of rear-facing cameras. A type of the camera 193 may include but is not limited to a wide-angle camera, an ultra-wide-angle camera, a long-focus camera, and the like.

Hardware configurations and physical locations of the cameras 193 may be different. Therefore, sizes, ranges, content, definition, or the like of images captured by different cameras may be different.

Image output sizes of the cameras 193 may be different or the same. An image output size of a camera is a length and a width of an image captured by the camera. Both the length and the width of the image may be measured by using a quantity of pixels. The image output size of the camera may also be referred to as an image size, an image dimension, a pixel size, or an image resolution. A common image output ratio of a camera may include 4:3, 16:9, 3:2, or the like. The image output ratio is an approximate ratio of a quantity of pixels at a length of an image captured by the camera to a quantity of pixels at a width of the image.

The cameras 193 may correspond to a same focal length, or may correspond to different focal lengths. A larger focal length corresponding to a camera indicates a smaller field of view (field of view, FOV) of the camera. The field of view is an angle range within which an optical system can perform imaging.

The cameras 193 may be disposed on two sides of the electronic device. A camera located on a same plane as the display 194 of the electronic device may be referred to as a front-facing camera, and a camera located on a plane on which a rear cover of the electronic device is located may be referred to as a rear-facing camera. The front-facing camera may be configured to capture an image of a photographer facing the display 194, and the rear-facing camera may be configured to capture an image of a photographed object (for example, a person or scenery) facing the photographer.

In some embodiments, the camera 193 may be configured to capture depth data. For example, the camera 193 may include a time of flight (time of flight, TOF) 3D sensing module or a structured light (structured light) 3D sensing module, configured to obtain depth information. A camera configured to capture depth data may be a front-facing camera or a rear-facing camera.

The digital signal processor is configured to process a digital signal, and may further process other digital signals in addition to the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that quickly processes input information with reference to a structure of a biological neural network, for example, a mode of transfer between human brain neurons, and may further continuously perform self-learning. Intelligent cognition applications, such as image recognition, facial recognition, speech recognition, and text understanding, of the electronic device 100 may be implemented through the NPU.

In some implementations, in a group photographing scenario, the processor 110 (for example, the controller or the GPU) may fit an image captured by the camera and a picture including an object A, and store a fitting result in the memory. For a specific implementation of the fitting operation performed by the processor 110, refer to detailed descriptions in subsequent method embodiments. In this way, a composite image obtained through fitting includes both the objectA and an object B photographed by the camera, so that multi-object group photographing is implemented.

In some implementations, the processor 110 (for example, the controller or the GPU) may separately fit N frames of images captured by the camera 193 at a moment at which the electronic device 100 receives a photographing instruction and an earlier moment with a picture including an object A to obtain N frames of composite images, and then select a frame with best quality from the N composite frames and store the frame in the memory as a group photographing result.

In some implementations, in a group photographing scenario, the processor 110 (for example, the controller or the GPU) may separately fit a plurality of frames of images captured by the camera and a picture including an object A, and store a fitting result in the memory. For example, the plurality of frames of images captured by the camera and the picture including the object A are fit into a plurality of images, and a video encoder in the processor 110 may encode a plurality of composite images to generate a video file. In this way, each frame of image of the video file may include the object A and an object in a new image captured by the camera.

The internal memory 121 may include one or more random access memories (random access memory, RAM) and one or more non-volatile memories (non-volatile memory, NVM). The internal memory 121 is configured to store a fitting result of the processor 110.

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth-generation DDR SDRAM is usually referred to as a DDR5 SDRAM), and the like. The non-volatile memory may include a magnetic disk storage device and a flash memory (flash memory).

The flash memory may include a NOR flash, a NAND flash, a 3D NAND flash, and the like through division according to an operation principle; may include a single-level cell (single-level cell, SLC), a multi-level cell (multi-level cell, MLC), a triple-level cell (triple-level cell, TLC), a quad-level cell (quad-level cell, QLC), and the like through division based on a potential order of a storage unit; or may include a universal flash storage (English: universal flash storage, UFS), an embedded multimedia card (embedded multimedia card, eMMC), and the like through division based on storage specifications.

The processor 110 may directly perform a read or write operation on the random access memory. The random access memory may be configured to store executable programs (for example, machine instructions) of an operating system or another running program, and may be further configured to store data of a user and an application, and the like.

The non-volatile memory may also store an executable program, data of a user and an application, and the like, which may be pre-loaded to the random access memory for the processor 110 to directly perform a read or write operation.

The external memory interface 120 may be used for connecting an external non-volatile memory, to extend a storage capability of the electronic device 100. The external non-volatile memory communicates with the processor 110 through the external memory interface 120, to implement a data storage function. For example, files such as music and videos are stored in the external non-volatile memory.

The electronic device 100 may implement an audio function, for example, music playing or recording, through the audio module 170, the speaker 170A, the receiver 170B, the microphone 170C, the headset jack 170D, the application processor, and the like.

The touch sensor 180K is also referred to as a "touch device". The touch sensor 180K may be disposed on the display 194. The touch sensor 180K and the display 194 constitute a touchscreen, which is also referred to as a "touch control screen". The touch sensor 180K is configured to detect a touch operation performed on or near the touch sensor. The touch sensor may transmit the detected touch operation to the application processor to determine a type of a touch event. The display 194 may provide visual output related to the touch operation. In some other embodiments, the touch sensor 180K may alternatively be disposed on a surface of the electronic device 100 at a location different from a location of the display 194.

A software system of the electronic device 100 may use a hierarchical architecture, an event-driven architecture, a microkernel architecture, a micro service architecture, or a cloud architecture. In embodiments of this application, a mobile operating system with a hierarchical architecture is used as an example to describe a software structure of the electronic device 100.

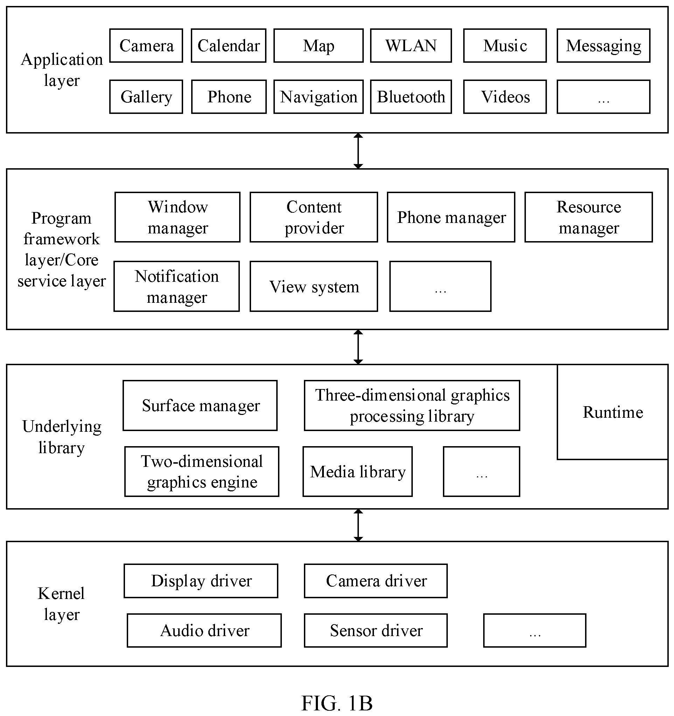

FIG. 1B is a block diagram of a software structure of the electronic device 100 in embodiments of this application.

In a hierarchical architecture, software is divided into several layers, and each layer has a clear role and task. The layers communicate with each other through a software interface. In some embodiments, the mobile operating system is divided into four layers: an application layer, a program framework layer/core service layer, an underlying library and runtime, and a kernel layer from top to bottom.

The application layer may include a series of application packages.

As shown in FIG. 1B, the application packages may include applications such as Camera, Gallery, Calendar, Phone, Map, Navigation, WLAN, Bluetooth, Music, Videos, and Messaging.

The program framework layer provides an application programming interface (application programming interface, API) and a programming framework for an application at the application layer. The program framework layer includes some predefined functions.

As shown in FIG. 1B, the program framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to store and obtain data, and enable the data to be accessed by an application. The data may include a video, an image, audio, calls that are made and answered, a browsing history, a bookmark, an address book, and the like.

The view system includes visual controls, such as a control for displaying text and a control for displaying a picture. The view system may be configured to construct an application. A display interface may include one or more views. For example, a display interface including an SMS message notification icon may include a text display view and a picture display view.

The phone manager is configured to provide a communication function for the electronic device, for example, management of a call status (including answering, hanging up, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without user interaction. For example, the notification manager is configured to indicate download completion or provide a message notification. The notification manager may alternatively be a notification that appears in a top status bar of the system in a form of a graph or scroll bar text, for example, a notification for an application running in the background, or may be a notification that appears on the screen in a form of a dialog window. For example, text information is displayed in the status bar, an alert tone is played, the electronic device vibrates, or an indicator blinks.

The runtime may be all code libraries, frameworks, and the like that are needed for running a program. For example, for the C language, the runtime includes a series of function libraries needed for running a C program. For the Java language, in addition to a core library, the runtime further includes a virtual machine and the like needed for running a Java program. The core library may include a function that needs to be invoked in the Java language.

The underlying library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports replay and recording of a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example operation process of software and hardware of the electronic device with reference to a photographing scenario.

When the touch sensor 180K receives a touch operation, a corresponding hardware interrupt is sent to the kernel layer. The kernel layer processes the touch operation into a raw input event (including information such as touch coordinates and a timestamp of the touch operation). The raw input event is stored at the kernel layer. The application framework layer obtains the raw input event from the kernel layer, and recognizes a control corresponding to the input event. For example, the touch operation is a tap operation, and a control corresponding to the tap operation is a control of an icon of a camera application. The camera application invokes an interface of the application framework layer to start the camera application, and then invokes the kernel layer to start the camera driver, to capture a static image or a video through the camera 193.

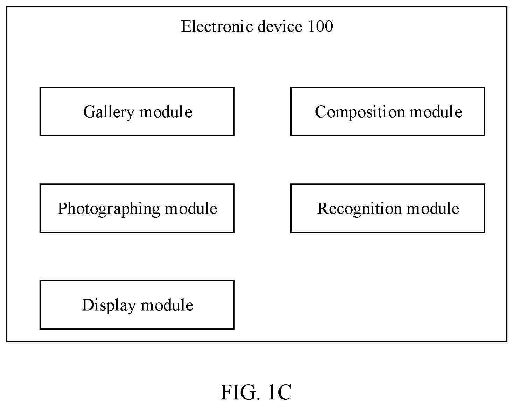

FIG. 1C is a block diagram of another software structure of the electronic device 100 provided in embodiments of this application.

As shown in FIG. 1C, the electronic device 100 includes a gallery module, a photographing module, a display module, a recognition module, and a composition module.

The gallery module is configured to store a plurality of pictures, including a picture that includes an object A. The gallery module may further provide an entry for enabling a "group photo" function, and may be configured to store a fitting result of the electronic device 100.

The photographing module is configured to capture an image.

The display module is configured to display the picture that has transparency or is blurred, and also display the image captured by the photographing module. Alternatively, the display module is configured to display a composite image obtained by fitting the image captured by the photographing module and the picture including the object A.

The recognition module is configured to recognize an area, in which an object B is located, in the image captured by the photographing module, and a background area other than the object B. Alternatively, the recognition module is configured to recognize an area, in which the object A is located, in the picture including the object A, and a background area other than the area in which the object A is located.

The composition module is configured to fit, into the picture including the object A, the area, in which the object B is located, in the image captured by the photographing module. Alternatively, the composition module is configured to fit, into the image captured by the photographing module, the area, in which the objectA is located, in the picture including the object A.

The following describes user interfaces provided in embodiments of this application.

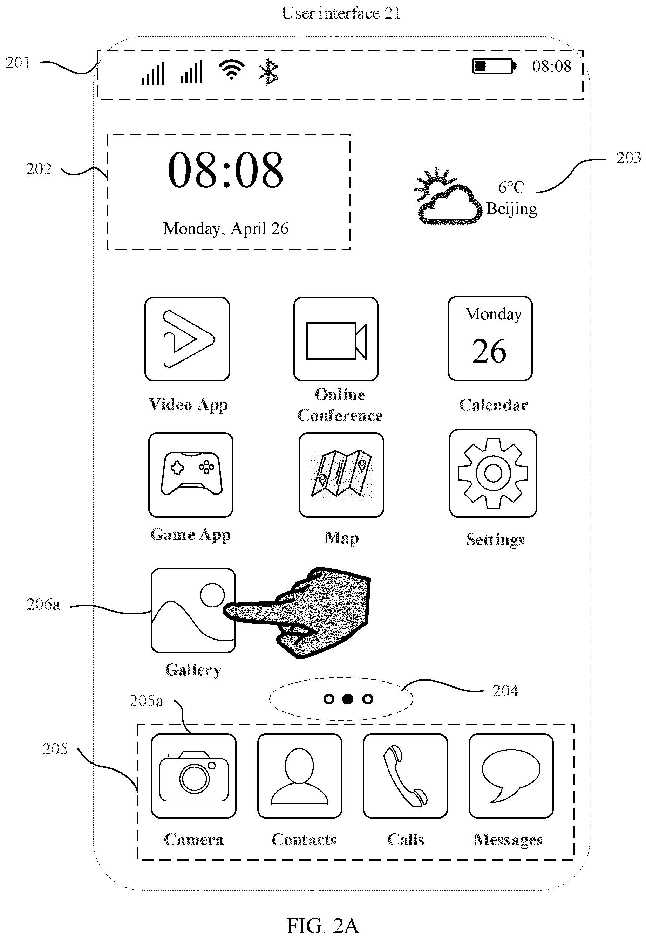

**FIG. 2A to FIG. 2H** **show a group of example user interfaces for group photographing that are provided by the electronic device 100 in embodiments of this application.**

FIG. 2A shows an example user interface 21, on the electronic device 100, that is used for displaying installed applications.

A status bar 201, a calendar (calendar) and time indicator 202, a weather indicator 203, a page indicator 204, a tray 205 with icons of commonly used applications, and other application icons are displayed on the user interface 21.

The status bar 201 may include one or more signal strength indicators for a mobile communication signal (which may also be referred to as a cellular signal), a Bluetooth indicator, one or more signal strength indicators for a Wi-Fi signal, a battery status indicator, a time indicator, and the like.

The calendar (calendar) and time indicator 202 indicates a calendar (calendar) and current time. The weather indicator 203 indicates weather.

The page indicator 204 may indicate a specific page to which an application icon currently browsed by a user belongs. In this embodiment of this application, application icons may be distributed on a plurality of pages, and the user may flick left or right to browse application icons on different pages.

A calls icon, a messages icon, a camera icon 205a, a contacts icon, and the like may be displayed in the tray 205 with icons of commonly used applications.

The other application icons may include, for example, an icon of a video application, an icon of an online conference application, an icon of a calendar (calendar), an icon of a game application, an icon of a map application, an icon of a settings application, and an icon 206a of a gallery application.

A camera is an app, on the electronic device 100, that is configured to invoke a camera to capture an image. A name of the application is not limited in this embodiment. The camera app in this embodiment of this application further provides a "group photo" function. The camera app may be a system application provided by the electronic device 100, or may be a third-party application.

A gallery is a picture management app on the electronic device 100, for example, a smartphone or a tablet computer, and may also be referred to as "Album". A name of the application is not limited in this embodiment. The app may support the user in performing various operations, such as browsing, editing, deletion, and selection, on a picture stored on the electronic device 100. That is, an object managed by the "gallery" is the picture. In some other cases, the app may also support the user in performing the various operations on a picture stored on a cloud server. It can be understood that, in this embodiment, the picture may be captured by the electronic device 100 through the camera 193, or may be obtained from another application or downloaded from a web page. The gallery in this embodiment of this application further provides an entry for the "group photo" function. The gallery may be a system application provided by the electronic device 100, or may be a third-party application.

In addition, more applications may be further installed on the electronic device 100, and icons of the applications may be displayed on the display. For example, a shopping application and a ticket booking application may be further installed on the electronic device 100. The shopping application may be used to purchase goods online. The ticket booking application may be used to order various tickets, such as an air ticket, a train ticket, and a ship ticket.

Names of the foregoing applications are merely terms used in embodiments of this application, meanings represented by the terms are described in embodiments, and the names of the applications do not constitute any limitation on embodiments.

In addition, the user interface 21 shown in FIG. 2A may further include a navigation bar, a sidebar, and the like. In some embodiments, the example user interface 21 shown in FIG. 2A may be referred to as a home screen (home screen).

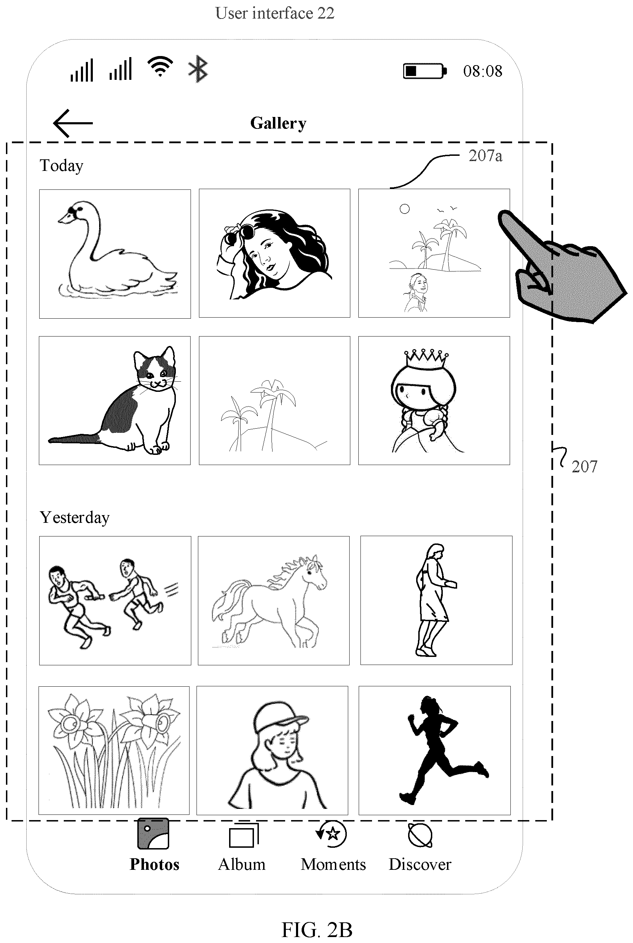

FIG. 2B shows an example user interface 22 provided by the gallery app on the electronic device 100.

FIG. 2B may show a user interface displayed by the electronic device 100, in response to a user operation (for example, a tap operation or a touch operation) performed on the icon 206a of the gallery application in FIG. 2A, after the electronic device 100 detects the user operation.

As shown in FIG. 2B, the user interface 22 may include a status bar, an application title bar, and a picture area 207.

For the status bar, refer to the status bar 201 on the user interface 21 shown in FIG. 2A. Details are not described herein again.

The application title bar may include a back button and a current-page indicator. The back button is an app-level back button, and may be used to return to an upper-level menu. A person skilled in the art can understand that a logical upper level of a page is fixed and is determined during application design. The current-page indicator may indicate a current page, and for example, may be text information "Gallery". In addition to the text information, the current-page indicator may alternatively be an icon.

One or more pictures, for example, a picture 207a, may be displayed in the picture area 207. When the electronic device detects a swipe-up or swipe-down operation in the picture area 207, in response to the swipe operation, the electronic device may update the picture displayed in the picture area 207, so that the user can browse the picture. To be specific, the user may swipe up or down in the picture area 207 to browse more pictures. In addition to the swipe-up or swipe-down operation, the user may alternatively swipe left or right in the picture area 207 to browse more pictures. The picture displayed in the picture area 207 may be a thumbnail. In this case, a raw image corresponding to the picture displayed in the picture area 207 may be stored on the electronic device, or may be stored on the cloud server. Unless otherwise specified, a picture in the following embodiments may be stored on the electronic device, or may be stored on the cloud server.

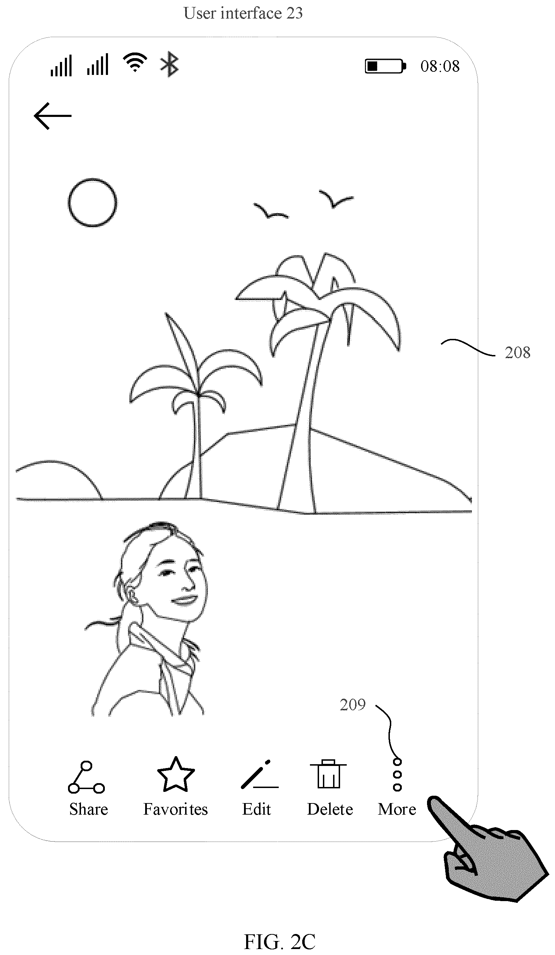

As shown in FIG. 2B, the electronic device 100 may detect, on the user interface 22, a user operation (for example, a tap operation or a touch operation) performed by the user on the picture 207a. In response to the operation, the electronic device 100 may display a user interface 23 shown in FIG. 2C.

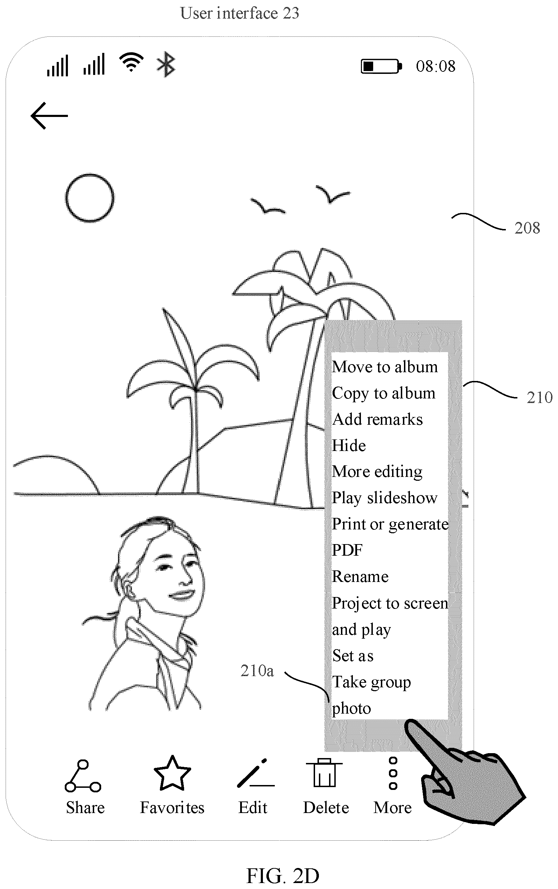

As shown in FIG. 2C, the electronic device 100 may display, in a larger area on the user interface 23, a raw image corresponding to the picture 207a. A picture 208 is displayed on the user interface 23. The picture 208 may be the raw image of the picture 207a. In some embodiments, the picture 208 may be captured by the electronic device 100 at a specific place (for example, a place 1), or may be obtained by the electronic device 100 from a network. The picture 208 includes a person object and a background area. The person object may be referred to as an object A, and the picture 208 may be referred to as a picture including the object A. A location of the object A is displayed in the background area. For example, a coconut tree, a seagull, a hillside, and the sun are displayed in the background area of the picture 208 shown in FIG. 2C. A Share control, a Favorites control, an Edit control, a Delete control, a More control 209, and the like may be further displayed on the user interface 23. The Share control, the Favorites control, the Edit control, and the Delete control are used to detect a user operation. The electronic device 100 may perform an operation, for example, sharing, adding to favorites, editing, or deletion, on the picture 208 in response to the user operation. The More control 209 may be used to detect a user operation (for example, a tap operation or a touch operation). In response to the user operation, the electronic device 100 may display a function list 210 shown in FIG. 2D.

As shown in FIG. 2D, a plurality of function controls, for example, controls for copying the picture 208 to an album, moving the picture 208 to an album, projecting the picture 208, and printing the picture 208, are displayed in the function list 210. The plurality of function controls displayed in the function list 210 include a control 210a for enabling a "group photo" function for the picture 208. The control 210a is used to detect a user operation (for example, a tap operation or a touch operation). In response to the user operation, the electronic device 100 may enable a "group photo" function for the picture 208.

In the foregoing examples in FIG. 2B to FIG. 2D, the user may tap a picture to view the picture, and then enable a "group photo" function for the picture by using an entry provided by a user interface on which the picture is displayed.

In addition to responding to tapping on a control 210a on a user interface on which a picture is displayed, the electronic device 100 may alternatively enable a "group photo" function for the picture in response to another user operation. For example, the electronic device 100 may alternatively enable a "group photo" function for the picture 207a displayed in FIG. 2B after receiving a touch-and-hold operation on the picture, or the electronic device 100 may enable a "group photo" function for the picture 207a displayed in FIG. 2B after receiving a circle drawing gesture on the picture, or the electronic device 100 may enable a "group photo" function for the picture 208 shown in FIG. 2C after receiving a touch-and-hold operation on the picture, or the electronic device 100 may receive a voice control instruction. A specific implementation of an operation for triggering the electronic device 100 to enable a "group photo" function for a picture is not limited in this application.

In addition to a picture in the "gallery", a scenario in which the user triggers a "group photo" function for a picture may further include: The user triggers a "group photo" function for a picture on a network when viewing the picture, the user triggers a "group photo" function for a picture in an application, for example, a file browser, and so on.

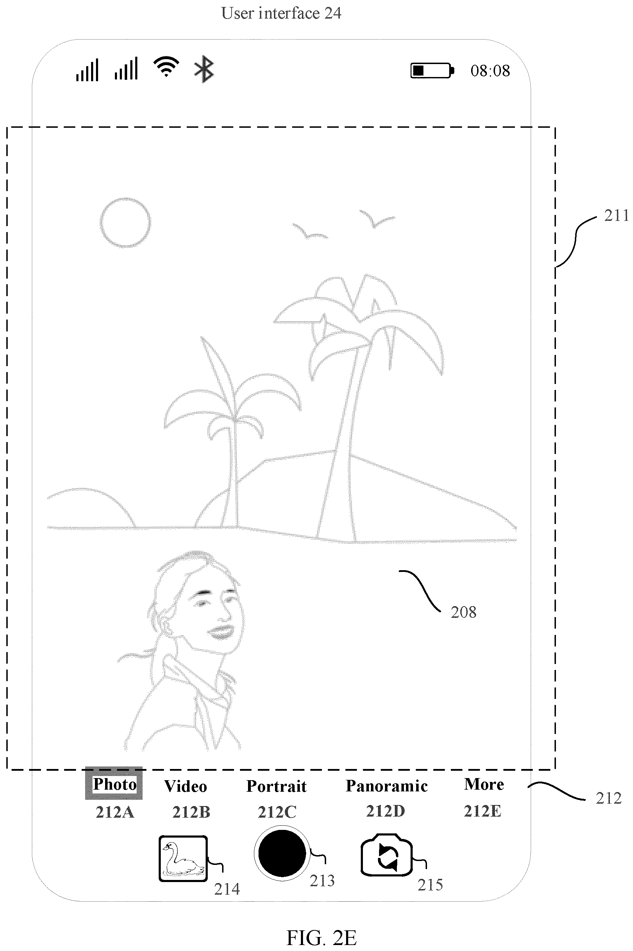

FIG. 2E to FIG. 2H show a group of example user interfaces provided by the camera application after the electronic device 100 enables the "group photo" function for the picture 208.

After enabling the "group photo" function for the picture 208, the electronic device 100 may automatically start the camera application.

FIG. 2E shows a user interface 24 displayed after the electronic device 100 starts the camera application.

The example user interface 24 shown in FIG. 2E may be displayed after the electronic device 100 detects a user operation (for example, a tap operation or a touch operation) performed on the control 210a shown in FIG. 2D. The user interface 24 may be a user interface of the camera application in a default Photo mode, and may be used by the user to take a photo by using a default rear-facing camera.

As shown in FIG. 2E, the user interface 24 may include an area 211, an image shooting mode list 212, a control 213, a control 214, and a control 215.

The area 211 may be referred to as a preview frame 211 or a viewfinder frame 211. The preview frame 211 may be used to display the picture 208 that has specific transparency or is blurred.

After the camera 193 of the electronic device is started and captures an image, an image captured by the camera 193 in real time may be further displayed in the preview frame 211. The electronic device 100 may refresh displayed content in the preview frame 211 in real time, so that the user can preview an image currently captured by the camera 193. The electronic device 100 may display, in an overlay manner, the picture 208 that has specific transparency or is blurred on the image captured by the camera 193 in real time. Because the picture 208 has specific transparency and/or is blurred, the user can see, in the preview frame 211, both the picture 208 and the image that is captured by the camera 193 in real time and that is under the picture 208.

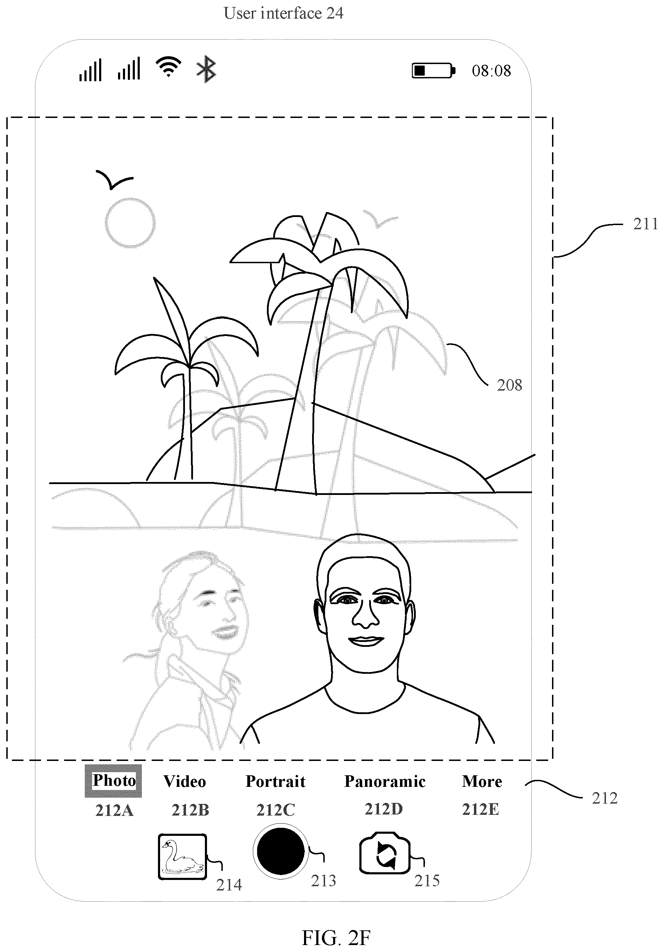

In some implementations, after enabling the "group photo" function and starting the camera application, the electronic device 100 may first display only the picture 208 that has specific transparency or is blurred in the preview frame 211, as shown in FIG. 2E; and then starts the camera 193 and displays an image captured in real time in the preview frame 211, as shown in FIG. 2F.

In some other implementations, after enabling the "group photo" function and starting the camera application, the electronic device 100 may directly start the camera 193 to capture an image. In this case, the electronic device 100 may directly display, in the preview frame 211, both the picture 208 that has specific transparency or is blurred and an image captured by the camera 193 in real time. To be specific, after receiving the user operation performed on the control 210a in FIG. 2E, the electronic device 100 may directly display a user interface shown in FIG. 2F, without displaying the user interface shown in FIG. 2E.

One or more image shooting mode options may be displayed in the image shooting mode list 212. The one or more image shooting options may include a Photo mode option 212A, a Video mode option 212B, a Portrait mode option 212C, a Panoramic mode option 212D, and a More option 212E. The one or more image shooting options may be represented as text information on the interface, for example, "Photo", "Video", "Portrait", "Panoramic" and "More". In addition, the one or more image shooting options may alternatively be represented as icons or interactive elements (interactive element, IE) in other forms on the interface.

The control 213 may be used to detect a user operation that triggers image shooting (photographing or video recording). The electronic device may detect a user operation performed on the control 213 (for example, a tap operation on the control 213). In response to the operation, the electronic device 100 may store an image captured by the camera 193, and perform a fitting operation on the image and the picture 208 to generate a picture in the gallery. When the user switches to a Video mode, the control 213 may be changed to a corresponding video recording control. The electronic device may detect a user operation performed on the video recording control. In response to the operation, the electronic device 100 may store a plurality of frames of images captured by the camera 193, and separately perform fitting operations on the plurality of frames of images and the picture 208 to generate a video in the gallery. In addition, the electronic device 100 may further display a thumbnail of the stored image in the control 214. The image may be generated by the electronic device 100 after the "group photo" function is enabled, or may be generated when the "group photo" function is not enabled. That is, the user may tap the control 213 or the video recording control to trigger image shooting. The control 213 or the video recording control may be a button or a control in another form. In this application, the control 213 may be referred to as a photographing control. The photographing control and the video recording control may be collectively referred to as an image shooting control.

The control 215 may be used to detect a user operation that triggers camera flipping. The electronic device 100 may detect a user operation performed on the control 215 (for example, a tap operation on the control 215). In response to the operation, the electronic device 100 may perform camera flipping, for example, switch from a rear-facing camera to a front-facing camera.

The electronic device 100 may detect a user operation performed on an image shooting mode option, and the user operation may be used to select an image shooting mode. In response to the operation, the electronic device 100 may enable the image shooting mode selected by the user. Particularly, when the user operation is performed on the More image shooting mode option 212E, the electronic device 100 may further display more other image shooting mode options, for example, a slow-motion image shooting mode option, to present more abundant image shooting functions to the user. Without being limited to a case shown in FIG. 2E, the More image shooting mode option 212E may not be displayed in the image shooting mode list 212, and the user may browse other image shooting mode options by sliding left or right in the image shooting mode list 212.

As shown in FIG. 2F, both an image with a lighter color and an image with a darker color are displayed in the preview frame 211. The image with the lighter color is the picture 208 that has specific transparency or is blurred, and the image with the darker color is an image captured by the camera 193 in real time.

In the preview frame 211, a location of the picture 208 that has specific transparency or is blurred remains unchanged. In addition, when using the electronic device 100 for image shooting, the user may move the electronic device to change framing of a currently used camera in the preview frame. To be specific, the user may move the electronic device to change framing of the camera 193, to change an image that is captured by the camera 193 in real time and that is displayed in the preview frame 211. For example, the user may move the electronic device leftward, rightward, forward, or backward, or may walk around while holding the electronic device. In some other implementations, the user may further adjust a focal length of a currently used camera (for example, perform electronic focusing), or change a currently used camera (for example, switch from a rear-facing camera to a front-facing camera), to change an image that is captured by the camera and that is displayed in the preview frame 211 in real time. In some other implementations, a change in a location of a person object, an animal object, or the like photographed by the camera 193 may be further indicated, to adjust framing in the preview frame 211.

The preview frame 211 may display, to the user, a relative location between objects in the picture 208 and the image captured by the camera 193 in real time. The user may adjust, based on content displayed in the preview frame 211, the image that is captured by the camera and that is displayed in the preview frame 211 in real time, to make the image captured by the camera include an object B, and make the object B be at a location, relative to the object A in the picture 208, that the user is satisfied with. An object for which a group photo needs to be taken with the object A is referred to as the object B.

As shown in FIG. 2F, the picture 208 includes the object A and a background area, and a location of the object A is displayed in the background area. For example, the background area of the picture 208 displayed in the preview frame 211 in FIG. 2F indicates that a coconut tree, a seagull, a hillside, and the sun are present at the location of the object A.

In some implementations, the control 213 can be activated only when a location indicated by a background area of a real-time image that is captured by the camera and that is displayed in the preview frame 211 has a specific correlation with a location indicated by the picture 208 (for example, but not limited to, the location indicated by the background area of the picture 208). In another case, even if the control 213 receives a user operation, the electronic device 100 does not perform subsequent response. After the control 213 is activated, the user may tap the control 213 when an image captured by the camera includes the object B and the object B is at a satisfactory location relative to the object A in the picture 208, to trigger the electronic device 100 to store the image captured by the camera 193 and perform a fitting operation on the image and the picture 208. To be specific, the user can trigger the electronic device 100 to capture an image and perform a subsequent fitting operation, only when the location indicated by the picture 208 has a specific correlation with a location indicated by an image currently captured by the camera 193 of the electronic device 100 in real time.

In some other embodiments, the control 213 may remain active. Provided that the user makes an image captured by the camera include the object B and the object B is at a location, relative to the object A in the picture 208, that the user is satisfied with, the user may tap the control 213, to trigger the electronic device 100 to store the image captured by the camera 193 and perform a fitting operation on the image and the picture 208.

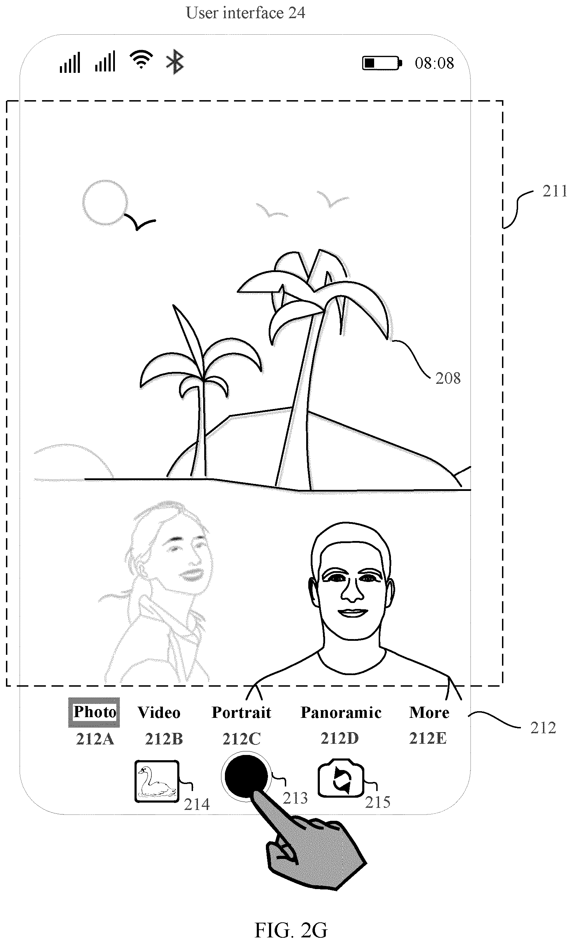

As shown in FIG. 2F, an image captured by the camera 193 in FIG. 2F includes a person object, and the person object may be the object B. Because the user is not satisfied with a relative location between the object B and the objectA in FIG. 2F, the user adjusts framing of the camera 193 in the preview frame 211, to adjust the object B and the object A in the preview frame 211 to a relative location that is shown in FIG. 2G and that the user is satisfied with.

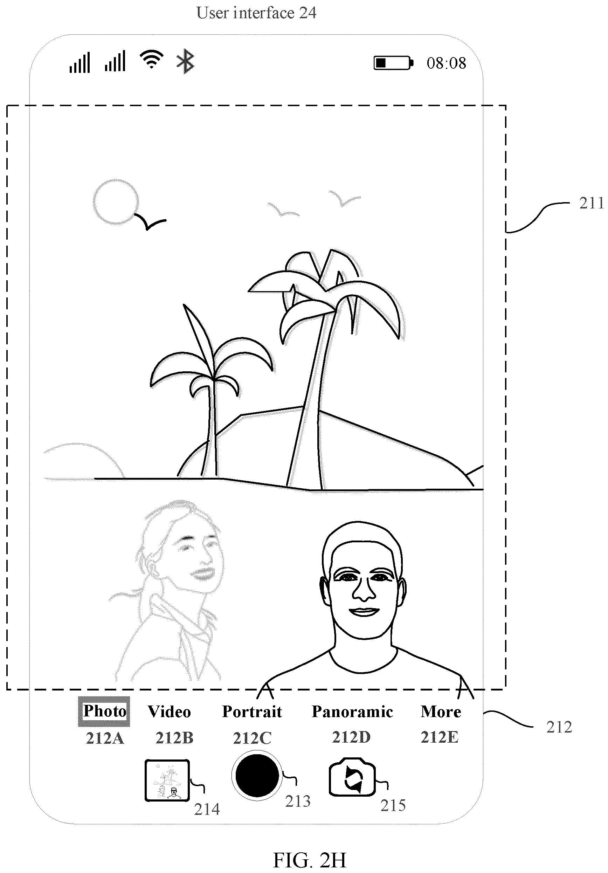

As shown in FIG. 2G, the electronic device 100 may detect a user operation (for example, a tap operation or a touch operation) performed on the control 213. In response to the operation, the electronic device 100 may store an image captured by the camera 193, and perform a fitting operation on the image and the picture 208 to generate a picture in the gallery. For a specific implementation of the fitting operation, refer to detailed descriptions in subsequent method embodiments. In addition, as shown in FIG. 2H, the electronic device 100 may further display, in the control 214, a thumbnail of the picture generated through the fitting operation, so that the user can tap and view the thumbnail.

In some implementations, when the electronic device 100 fits the image captured by the camera 193 and the picture 208, the fitting may fail, and a corresponding composite image cannot be generated. For example, when a background area of the image captured by the camera 193 has a low correlation with the picture 208, the electronic device 100 cannot successfully perform a fitting operation.

After the electronic device 100 takes a photo and performs a fitting operation in response to a user operation performed on the control 213, the electronic device 100 may keep the "group photo" function enabled. In this way, the user can take a plurality of photos, to implement a plurality of times of group photographing. In some other embodiments, after taking a photo and performing a fitting operation in response to a user operation performed on the control 213, the electronic device may alternatively disable the "group photo" function and enter a common image shooting mode.

In addition to the Photo mode shown in FIG. 2E to FIG. 2G, the user may alternatively select the Video mode or another mode, and the electronic device 100 may further perform image shooting in the Video mode or the another mode, to implement group photographing in the Video mode or the another mode.

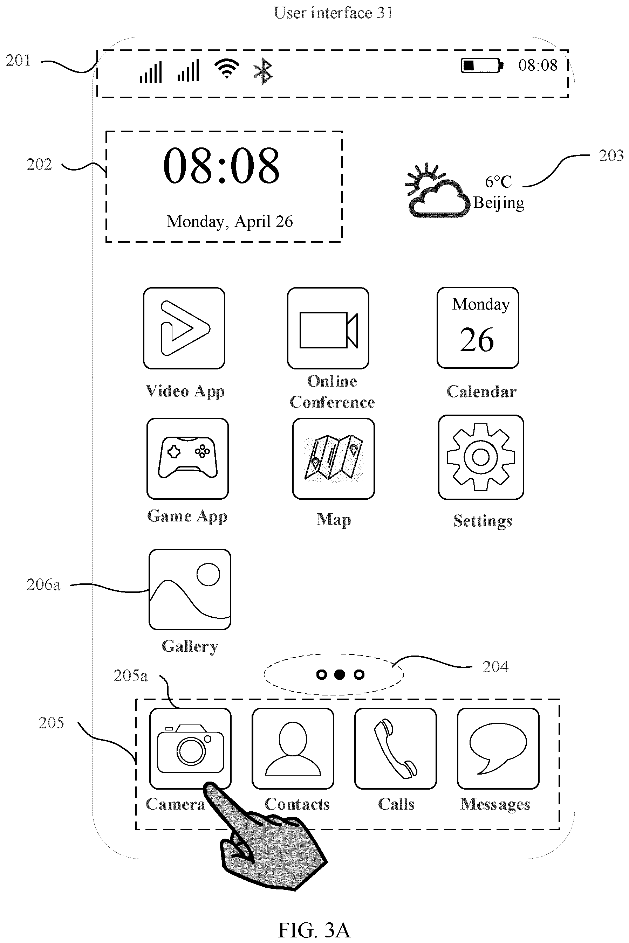

**FIG.** 3A to **FIG.** 3F show another group of example user interfaces for group photographing **that** are provided by the electronic device **100 in** embodiments of this application.

A difference between FIG. 3A to FIG. 3E and FIG. 2A to FIG. 2G lies in that entries for a "group photo" function in the two group photographing manners are different.

A user interface 31 shown in FIG. 3A is the same as the user interface 21 shown in FIG. 2A. Refer to FIG. 2A and related descriptions.

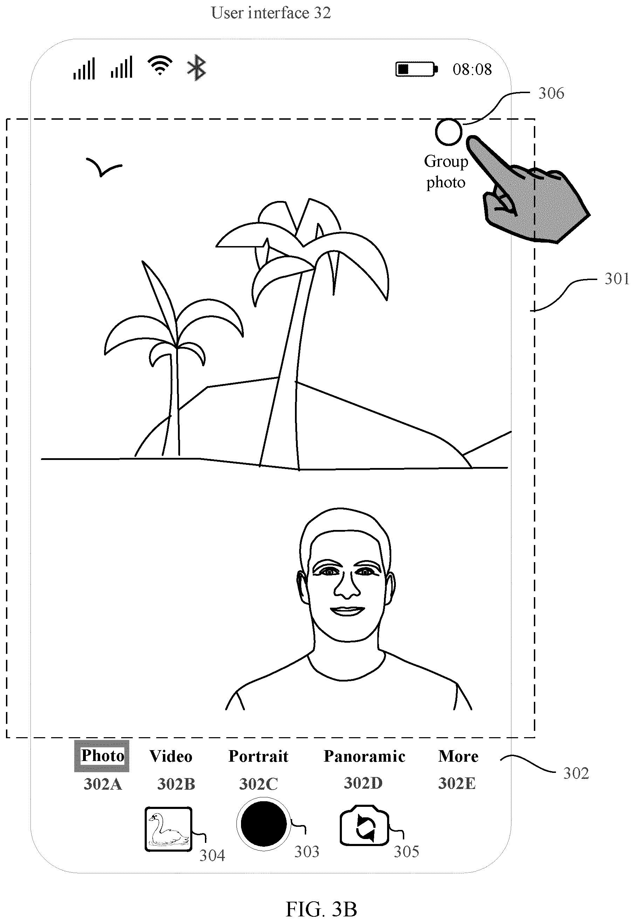

FIG. 3B shows an example user interface 32 provided by the camera application on the electronic device 100.

FIG. 3B may show a user interface displayed by the electronic device 100 when starting the camera application, in response to a user operation (for example, a tap operation or a touch operation) performed on an icon 205a of the camera application in FIG. 3A, after the electronic device 100 detects the user operation. The user interface 32 may be a user interface of the camera application in a default Photo mode, and may be used by the user to take a photo by using a default rear-facing camera.

As shown in FIG. 3B, the user interface 32 may include an area 301, an image shooting mode list 302, a control 303, a control 304, a control 305, and a control 306 for enabling a "group photo" function.

The area 301 may be referred to as a preview frame 301 or a viewfinder frame 301. The preview frame 301 may be used to display an image captured by the camera 193 of the electronic device 100 in real time. The electronic device 100 may refresh displayed content in the preview frame 301 in real time, so that the user can preview an image currently captured by the camera 193.

One or more image shooting mode options may be displayed in the image shooting mode list 302. The one or more image shooting options may include a Photo mode option 302A, a Video mode option 302B, a Portrait mode option 302C, a Panoramic mode option 302D, and a More option 302E.

The control 303 may be used to detect a user operation that triggers image shooting (photographing or video recording). The electronic device may detect a user operation performed on the control 303 (for example, a tap operation on the control 303). In response to the operation, the electronic device 100 may store an image displayed in the preview frame 211. When the user switches to a Video mode, the control 303 may be changed to a corresponding video recording control. The electronic device may detect a user operation performed on the video recording control. In response to the operation, the electronic device 100 may store an image displayed in the preview frame 211. In addition, the electronic device 100 may further display a thumbnail of the stored image in the control 304. That is, the user may tap the control 303 or the video recording control to trigger image shooting. The control 303 or the video recording control may be a button or a control in another form. In this application, the control 303 may be referred to as a photographing control. The photographing control and the video recording control may be collectively referred to as an image shooting control.

The control 305 may be used to detect a user operation that triggers camera flipping. The electronic device 100 may detect a user operation performed on the control 305 (for example, a tap operation on the control 305). In response to the operation, the electronic device 100 may perform camera flipping, for example, switch from a rear-facing camera to a front-facing camera.

The electronic device 100 may detect a user operation performed on an image shooting mode option, and the user operation may be used to select an image shooting mode. In response to the operation, the electronic device 100 may enable the image shooting mode selected by the user.

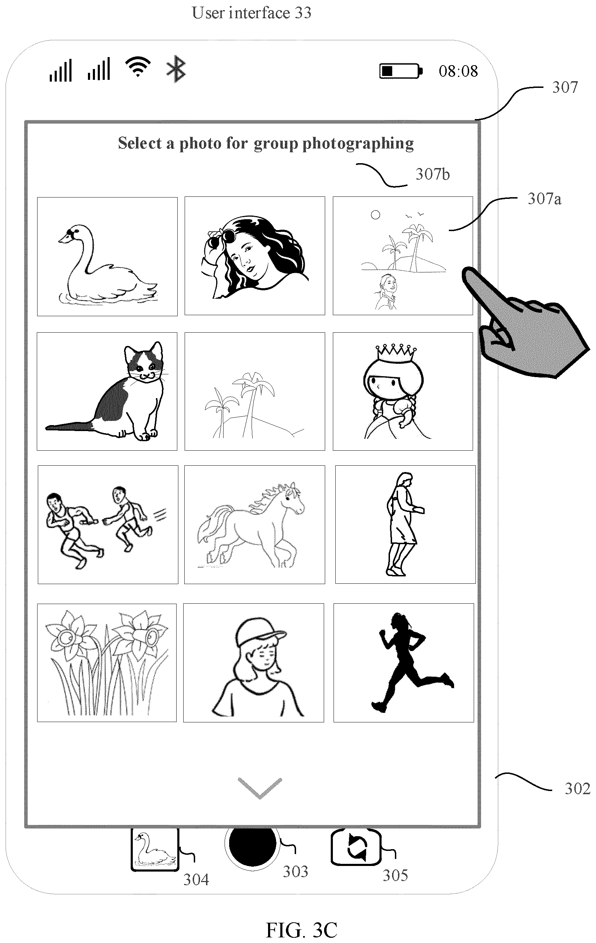

The control 306 may be used to detect a user operation (for example, a tap operation or a touch operation). In response to the user operation, the electronic device 100 may display, on a user interface 33, a picture area 307 shown in FIG. 3C. One or more pictures, for example, a picture 307a, may be displayed in the picture area 307. When the electronic device detects a swipe-up or swipe-down operation in the picture area 307, in response to the swipe operation, the electronic device may update the picture displayed in the picture area 307, so that the user can browse the picture. To be specific, the user may swipe up or down in the picture area 307 to browse more pictures. In addition to the swipe-up or swipe-down operation, the user may alternatively swipe left or right in the picture area 307 to browse more pictures. The picture displayed in the picture area 307 may be a thumbnail. In this case, a raw picture corresponding to the picture displayed in the picture area 307 may be stored on the electronic device, or may be stored on a cloud server.

Prompt information 307b may be further displayed in the picture area 307. The prompt information 307b is used to prompt the user to select one picture from pictures displayed in the picture area 307 as a group photo.

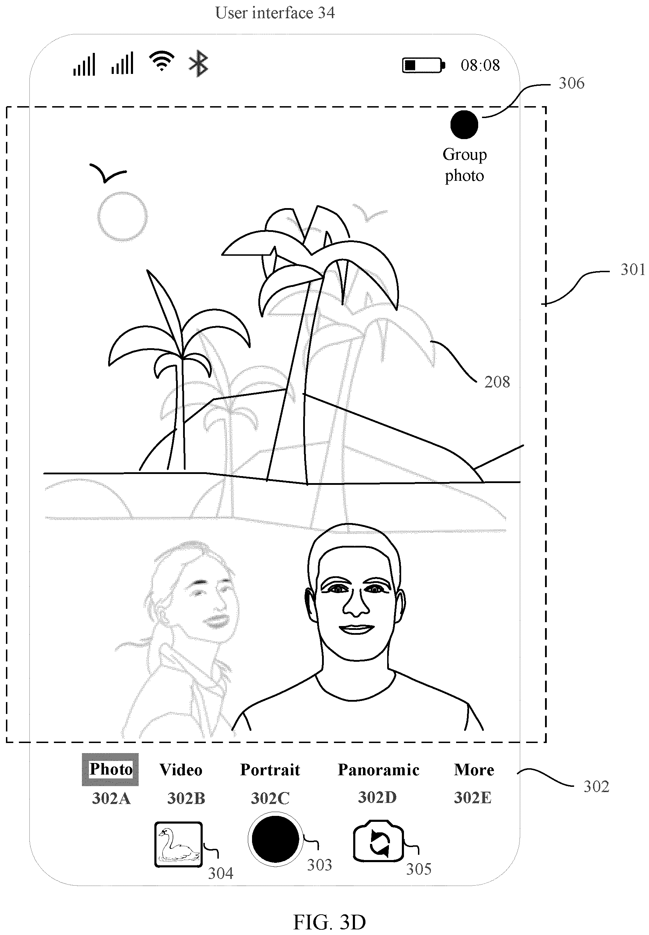

The electronic device 100 may detect a user operation (for example, a tap operation or a touch operation) performed on the picture 307a, and in response to the operation, enable a "group photo" function for a raw image corresponding to the picture 307a, and display a user interface 34 shown in FIG. 3D.

As shown in FIG. 3D, after the "group photo" function is enabled, the electronic device 100 may change a display form of the control 306 (for example, may change a display color of the control 306, change a display shape of the control 306, or change a hollow circle to a solid circle, as shown in FIG. 3D), to notify the user that the electronic device 100 has currently enabled the "group photo" function.

On the user interface 34 shown in FIG. 3D, after the electronic device 100 enables the "group photo" function, a picture 208 that has specific transparency or is blurred and an image captured by the camera 193 in real time are displayed in the preview frame 301. The picture 208 may be the raw image corresponding to the picture 307a shown in FIG. 3C. The electronic device 100 may refresh displayed content in the preview frame 301 in real time, so that the user can preview an image currently captured by the camera 193. The electronic device 100 may display, in an overlay manner, the picture 208 that has specific transparency or is blurred on the image captured by the camera 193 in real time. Because the picture 208 has specific transparency and/or is blurred, the user can see, in the preview frame 211, both the picture 208 and the image that is captured by the camera 193 in real time and that is under the picture 208.

For functions of a preview frame 301, an image shooting mode list 302, and a control 304 to a control 305 on the user interface 34 in FIG. 3D, refer to the functions of corresponding controls in FIG. 2F. It can be considered that areas or controls, other than the control 306, in FIG. 3D and FIG. 2G are the same.

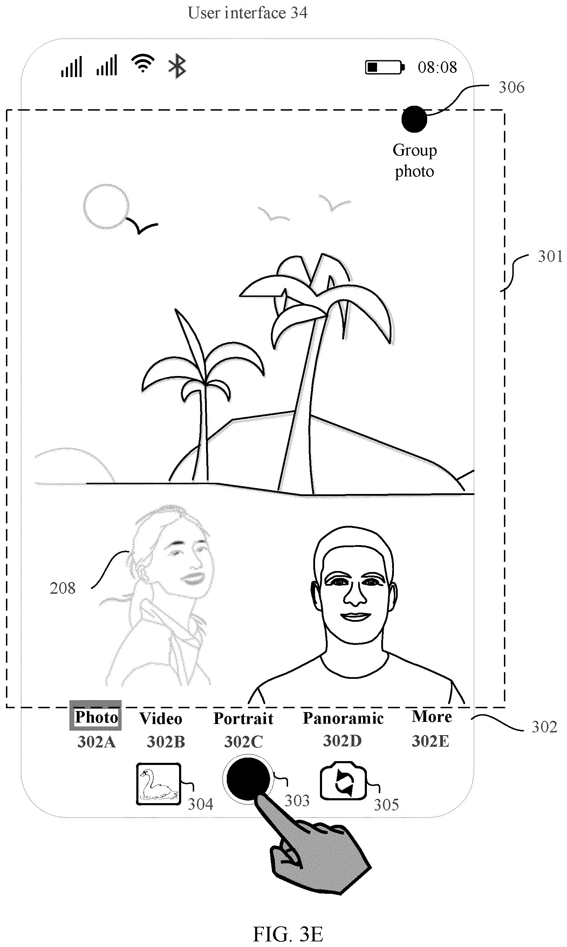

As shown in FIG. 3D, an image captured by the camera 193 in FIG. 3D includes a person object, and the person object may be an object B. Because the user is not satisfied with a relative location between the object B and an object A in FIG. 3D, the user adjusts framing of the camera 193 in the preview frame 301, to adjust the object B and the object A in the preview frame 301 to a relative location that is shown in FIG. 3E and that the user is satisfied with.

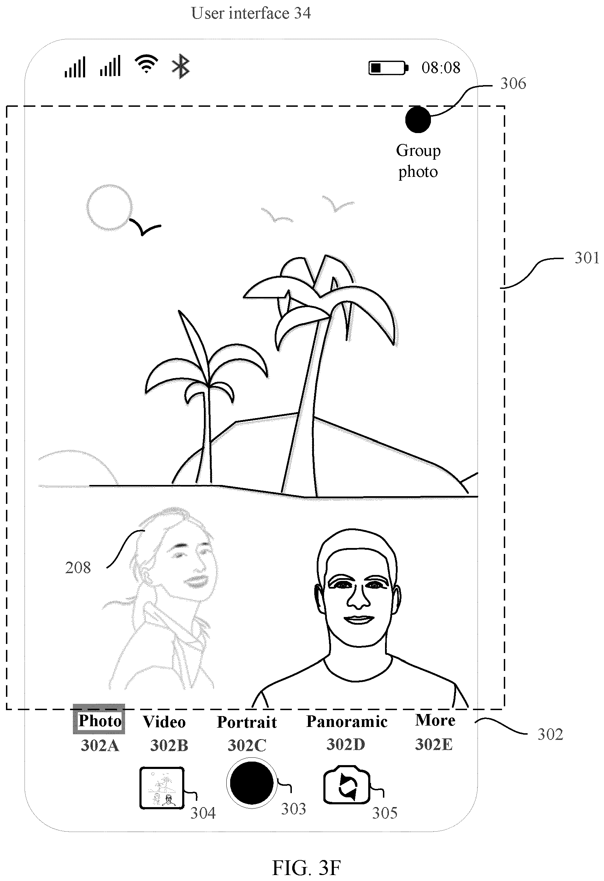

As shown in FIG. 3E, the electronic device 100 may detect a user operation (for example, a tap operation or a touch operation) performed on the control 303. In response to the operation, the electronic device 100 may store an image captured by the camera 193, and perform a fitting operation on the image and the raw image corresponding to the picture 307a to generate a picture in the gallery. For a specific implementation of the fitting operation, refer to detailed descriptions in subsequent method embodiments. In addition, as shown in FIG. 3F, the electronic device 100 may further display, in the control 304, a thumbnail of the picture generated through the fitting operation, so that the user can tap and view the thumbnail.

In some implementations, when the electronic device 100 fits the image captured by the camera 193 and the raw image corresponding to the picture 307a, the fitting may fail, and a corresponding composite image cannot be generated. For example, when a background area of the image captured by the camera 193 has a low correlation with the raw image corresponding to the picture 307a, the electronic device 100 cannot successfully perform a fitting operation.

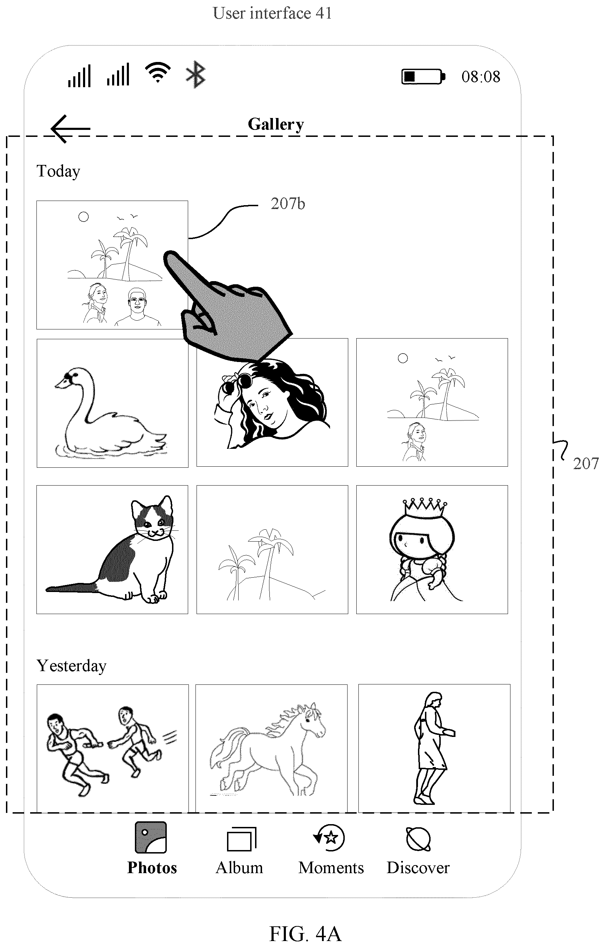

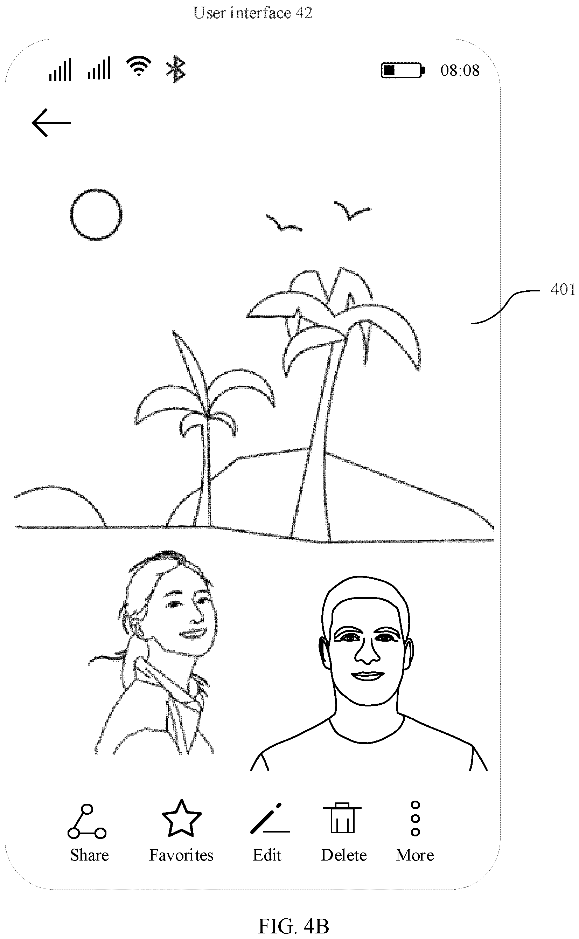

**FIG.** 4A and **FIG. 4B** show example user interfaces provided by the gallery application after the electronic device **100** in embodiments of this application stores a picture obtained through fitting.

FIG. 4A may show a user interface displayed by the electronic device 100, in response to a user operation (for example, a tap operation or a touch operation) performed on the icon 206a of the gallery application in FIG. 2A or FIG. 3A, after the electronic device 100 detects the user operation. The user interface shown in FIG. 4A is similar to the user interface 22 shown in FIG. 2B. Refer to related descriptions. As shown in FIG. 4A, a picture 207b is added to a picture area 207 on the user interface 41, and the picture 207b may be a thumbnail or a raw image of a picture, obtained through fitting, that is stored on the electronic device 100.

As shown in FIG. 4A, after detecting a user operation (for example, a tap operation or a touch operation) performed on the picture 207b, in response to the operation, the electronic device 100 may display, in a larger area on a user interface shown in FIG. 4B, the raw image corresponding to the picture 207b, for example, a picture 401. In some other embodiments, the user interface 43 shown in FIG. 4B may alternatively be displayed by the electronic device 100 in response to a user operation on the control 214 shown in FIG. 2H or the control 304 shown in FIG. 3F.

In some implementations, a "group photo" identifier may be further displayed on the picture 207b shown in FIG. 4A or the picture 401 shown in FIG. 4B, to indicate that the picture is captured by the electronic device 100 after a "group photo" function is enabled. An implementation form of the "group photo" identifier is not limited in this embodiment of this application. For example, the "group photo" identifier may be text or an icon.

Based on the electronic device 100 and the user interfaces implemented on the electronic device 100 in the foregoing descriptions, the following describes an image shooting method provided in embodiments of this application.

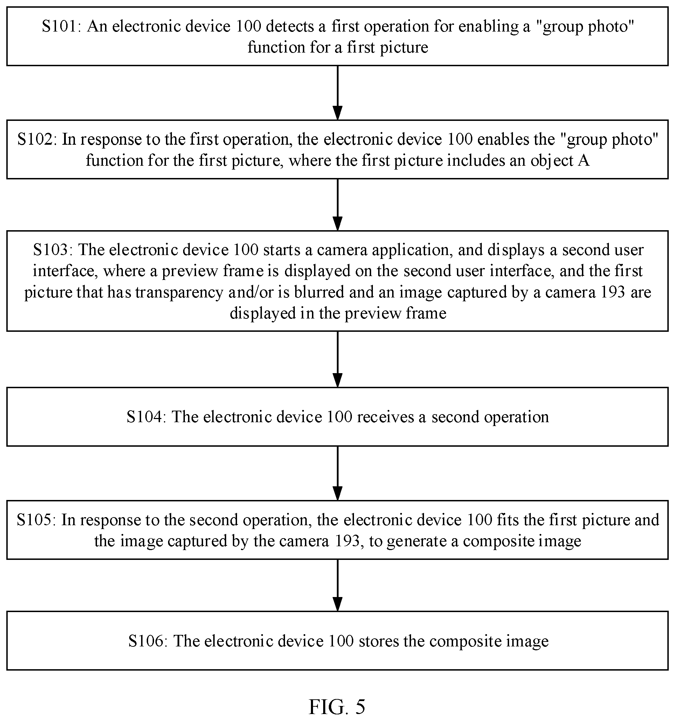

FIG. 5 shows an example process of the image shooting method. The image shooting method shown in FIG. 5 is described by using a photographing scenario as an example.

As shown in FIG. 5, the image shooting method may include the following steps.

**S101: The electronic device 100 detects a first operation for enabling a "group photo" function for a first picture.**

**S102: In response to the first operation, the electronic device 100 enables the "group photo" function for the first picture, where the first picture includes an object A.**

Specifically, the first picture may be a picture that is captured by the camera 193 and that is stored on the electronic device 100, or may be a picture downloaded by the electronic device 100 from a network, or may be a received picture shared by another device. The first picture may be a photo taken a long time ago, or may be a photo just taken by the electronic device 100. The first picture includes an object with which the user wants to take a group photo, and the object may be referred to as the object A. There may be one or more objects A. For example, the objectA may include but is not limited to a person, an animal, a landmark, a building, a doll, and the like. For example, the first picture may alternatively be an old photo of a family member that was taken many years ago.

For example, the first picture may be the raw image corresponding to the picture 207a shown in FIG. 2C, the picture 208 shown in FIG. 2C, the raw image corresponding to the picture 307a shown in FIG. 3C, or the picture 301 shown in FIG. 3D. The object A may be a person object in the foregoing picture.

The "group photo" function is provided by the electronic device 100. The function supports the electronic device 100 in displaying, on a preview interface provided by the camera application, the first picture that has transparency or is blurred, and also displaying an image captured by the camera 193 of the electronic device 100. The electronic device 100 receives a photographing instruction input by the user, and fits the first picture and the image captured by the camera to generate a composite image. After the "group photo" function is enabled, the electronic device performs subsequent operations.

In some implementations, with reference to FIG. 2A to FIG. 2D and related descriptions, the first operation for enabling the "group photo" function for the first picture may be, for example, a user operation performed on the control 210a in the function list 210, displayed on the electronic device 100, after an operation for the control 209 is input on the user interface 23, shown in FIG. 2C, on which the picture 208 is displayed. The control 209 may also be referred to as a first control, and the control 210a may also be referred to as a second control.

In some implementations, the first operation for enabling the "group photo" function for the first picture may be, for example, a touch-and-hold operation received by the electronic device 100 on the picture 207a shown in FIG. 2B, or a circle drawing gesture received by the electronic device 100 on the picture 207a shown in FIG. 2B, or a touch-and-hold operation received by the electronic device 100 on the picture 208 shown in FIG. 2C.

In this embodiment of this application, a user interface provided by the gallery application for displaying the first picture may be referred to as a first user interface. For example, both FIG. 2C and FIG. 2D may be referred to as the first user interface.

In some implementations, with reference to FIG. 3A to FIG. 3C and related descriptions, the first operation for enabling the "group photo" function for the first picture may be, for example, a user operation performed on the picture 307a in the picture area 307, displayed on the electronic device 100, after the electronic device 100 receives a user operation performed on the control 306 in FIG. 3B. The control 306 may also be referred to as a third control, the user operation performed on the control 306 may also be referred to as a fourth operation, and the user operation performed on the picture 307a may also be referred to as a fifth operation.

The user interface shown in FIG. 3B may be provided by the camera application, or may be a user interface provided by another application (for example, a social application or a shopping application) on the electronic device by invoking a camera interface. This is equivalent to that the another application on the electronic device may invoke the camera interface to enable the "group photo" function. A user interface that is provided by the camera application or provided by another application by invoking the camera interface and that is used to enable the "group photo" function, for example, the user interface shown in FIG. 3B or FIG. 3C, may be referred to as a second user interface.

In addition, the first operation for enabling the "group photo" function for the first picture may alternatively be implemented as a voice control instruction, a mid-air gesture instruction, a pressing operation on a physical button, or the like. A specific implementation of the first operation is not limited in this application.

**S103: The electronic device 100 starts** the **camera application, and displays** the **second user interface, where a preview frame is displayed on the second user interface, and the first picture that has transparency and/or is blurred and the image captured by the camera 193 are displayed in the preview frame.**

After enabling the "group photo" function for the first picture, the electronic device 100 may automatically start the camera application. The camera application may be a system application installed on the electronic device 100, or may be a third-party application.

Specifically, after starting the camera application, the electronic device 100 may display the second user interface provided by the camera application. The preview frame is displayed on the second user interface, and the first picture that has transparency and/or is blurred and an image captured by the camera 193 in real time are displayed in the preview frame. Herein, the second user interface may also be referred to as a preview interface. In some implementations, the electronic device 100 may display, in an overlay manner, the first picture that has transparency and/or is blurred on the image captured by the camera 193 in real time.

If the first picture has transparency, the user can not only see the first picture, but also see, through the first picture having transparency, other content that is displayed on the electronic device 100 and that is covered by the first picture. A value of the transparency of the first picture may be preset, or may be autonomously adjusted by the user according to an actual requirement, or may be adjusted based on light in an environment in which the electronic device 100 is currently located, or may be adjusted based on brightness of an image currently captured by the camera 193, or the like.

If the first picture is blurred, the electronic device 100 may first recognize a contour or content of the first picture, and depict the contour or the content of the first picture by using a dashed line, or blur the content of the first picture, to obtain a blurred first picture. In this case, the user can not only see the first picture, but also see, through the blurred first picture, other content that is displayed on the electronic device 100 and that is covered by the first picture.

The image that is captured by the camera 193 in real time and that is displayed in the preview frame on the second user interface is refreshed in real time. When the user moves the electronic device 100, changes a posture of the electronic device 100, or changes a used camera, or when a location of an object currently photographed by the camera 193, for example, a person or an animal, changes, or the like, an image captured by the camera 193 changes in real time, and the changed image is displayed in the preview frame in real time.

In addition, the image that is captured by the camera 193 in real time and that is displayed in the preview frame may alternatively be obtained by processing a raw image captured by the camera 193. For example, the electronic device 100 may perform image stabilization on the raw image captured by the camera 193, and then send a processed image to the display for display in the preview frame. For another example, if the user adjusts a focal length of the camera 193, the electronic device 100 crops the raw image captured by the camera 193, and sends a cropping result to the display for display in the preview frame. For another example, the user may select a current image shooting mode. In different modes, the electronic device 100 may perform different processing on the raw image captured by the camera 193, for example, blur a background area in a portrait mode, and then send a cropping result to the display for display in the preview frame.

For example, refer to FIG. 2F and FIG. 2G. For example, the second user interface may be the user interface 22 shown in FIG. 2F and FIG. 2G, and the preview frame may be the preview frame 211 in FIG. 2F and FIG. 2G. In FIG. 2F and FIG. 2G, the picture 208 with a lighter color may be the first picture that has transparency and that is displayed in the preview frame, and the image with a darker color is the image captured by the camera 193 in real time.

For example, refer to FIG. 3D and FIG. 3E. For example, the second user interface may be the user interface 34 shown in FIG. 3D and FIG. 3E, and the preview frame may be the preview frame 301 in FIG. 3D and FIG. 3E. In FIG. 3D and FIG. 3E, the picture 208 with a lighter color may be the first picture that has transparency and that is displayed in the preview frame, and the image with a darker color is the image captured by the camera 193 in real time.

It can be learned that a relative location between objects in the first picture and the image captured by the camera 193 in real time may be displayed to the user in the preview frame on the second user interface. The user may adjust, based on content displayed in the preview frame, the image that is captured by the camera and that is displayed in the preview frame in real time, to make a relative location between an object included in the image captured by the camera and the object A in the first picture meet an actual requirement of the user. A manner of adjusting, by the user, the image that is captured by the camera and that is displayed in the preview frame in real time may include but is not limited to: The user moves the electronic device 100 or changes a posture of the electronic device 100, the user changes a camera used by the electronic device 100, or the user indicates to change a location of an object currently photographed by the camera 193, for example, a person or an animal, or the like. For example, refer to FIG. 2F and FIG. 2G, or FIG. 3D and FIG. 3E. The user may adjust a relative location between a person object included in the image captured by the camera 193 and the object A in the first picture (to be specific, a person object in the picture).

In this embodiment of this application, in addition to indicating the first picture by displaying the first picture that has transparency or is blurred on the second user interface provided by the camera application, the electronic device 100 may alternatively display the first picture in the preview frame by displaying a line of an object included in the first picture, a location of an object in the first picture, a faded first picture, or the like, so that the user learns of a relative location between the object in the first picture and an object in the image captured by the camera 193 in real time. The foregoing information for notifying the user of the relative location between the object in the first picture and the object in the image captured by the camera 193 in real time may be referred to as indication information of the first picture. For example, the indication information of the first picture may include the first picture that has transparency or is blurred and that is displayed in the preview frame, the line of the object included in the first picture, the location of the object in the first picture, or the faded first picture. This is not limited in this embodiment of this application.

**S104: The electronic device 100 receives a second operation.**

**S105: In response to the second operation, the electronic device 100 fits the first picture and the image captured by the camera 193, to generate a composite image.**

The second operation may be a user operation for triggering the electronic device 100 to perform photographing or video recording. A user operation for triggering the electronic device 100 to perform photographing may also be referred to as a photographing instruction. A user operation for triggering the electronic device 100 to perform video recording may also be referred to as a video recording instruction.

For example, refer to FIG. 2F and FIG. 2G. For example, the second operation may be a user operation performed on the photographing control 213, or may be a user operation performed on the video recording control after the user selects the Video mode. Refer to FIG. 3D and FIG. 3E. The second operation may alternatively be a user operation performed on the photographing control 303, or a user operation performed on the video recording control after the user selects the Video mode.

In some implementations, the electronic device 100 responds to the second operation only when a correlation between a location indicated by the first picture and a location indicated by the image that is captured by the camera 193 and that is displayed in the preview frame on the second user interface is greater than a first value. A correlation between pictures is a degree of similarity and a degree of matching between pictures at relative locations. A large correlation between two pictures indicates that the two pictures include similar content, and the two pictures may be obtained through framing at a same place from similar angles of view. The first value may be preset. This is not limited herein. For example, refer to the foregoing related descriptions of FIG. 2E to FIG. 2G. The control 213 can be activated only when a location indicated by a background area of a real-time image that is captured by the camera and that is displayed in the preview frame 211 has a specific correlation with a location indicated by the picture 208 (for example, but not limited to, the location indicated by the background area of the picture 208). In another case, even if the control 213 receives a user operation, the electronic device 100 does not perform subsequent response.

In some other implementations, if the electronic device 100 receives the second operation after displaying the second user interface, the electronic device 100 immediately responds to the second operation. For example, refer to the foregoing related descriptions of FIG. 2E to FIG. 2G. The control 213 may remain active. Provided that the user makes an object included in an image captured by the camera be at a location, relative to the object A in the picture 208, that the user is satisfied with, the user may tap the control 213, to trigger the electronic device 100 to perform a subsequent step in response to the operation.

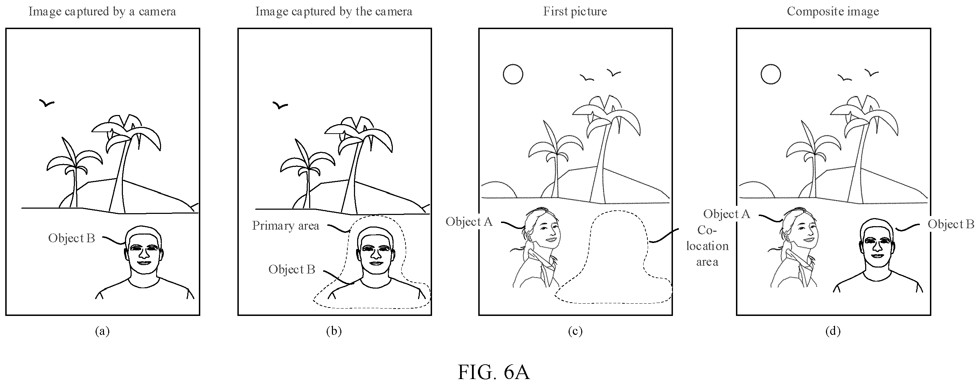

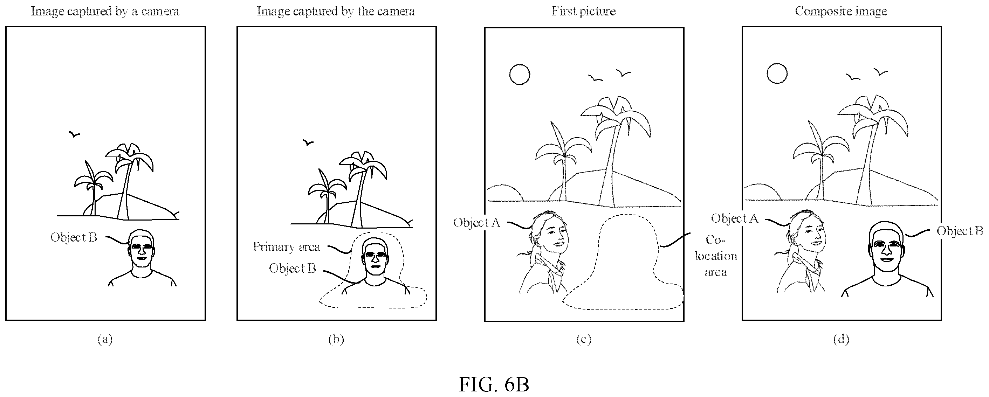

With reference to several image processing processes shown in FIG. 6A and FIG. 6B, the following describes how the electronic device 100 fits the first picture and the image captured by the camera 193, to generate the composite image. The process may specifically include the following steps.

**Step 1:** Recognize an object in the image captured by the camera, where the object may be referred to as an object B.

Specifically, the electronic device 100 may recognize a signature object, for example, a person, an animal, a landmark, a building, or a doll, in the image captured by the camera, and use the object as the object B. In some other implementations, the electronic device 100 may alternatively recognize, based on a distance between the camera and each object in the image captured by the camera, an object closest to the camera as the object B. In some other implementations, the user may alternatively select, as the object B, an object from an image that is captured by the camera and that is displayed in the preview frame. For example, the user may tap a location of a target object in the preview frame, and then the electronic device 100 may automatically circle a human body or a scene at the location, to select the object B without manually drawing a contour of a person or an object by the user.

In some implementations, the electronic device 100 may recognize, by using an image recognition algorithm, the object B included in the image captured by the camera. The image recognition algorithm may be, for example, an artificial intelligence (artificial intelligence, AI) algorithm.

In an implementation of this application, the electronic device 100 may recognize one or more objects B. This is not limited herein.

For example, refer to FIG. 6A and FIG. 6B. (a) in each of FIG. 6A and FIG. 6B shows a frame of image captured by the camera of the electronic device 100. As shown in the figure, the object B that is in the image and that is recognized by the electronic device 100 is a male object in the figure. A focal length used by the electronic device to capture (a) in FIG. 6B is greater than a focal length used to capture (a) in FIG. 6A.

**Step 2:** Determine, by using the object B as a reference, a primary area including the object B from the image captured by the camera.

In some implementations, the primary area may be an area, in the image captured by the camera, that includes the object B and that is obtained through extension toward a surrounding area by a distance M by using the object B as a reference.

M may be an empirical value obtained through testing. In some implementations, M-values of electronic devices of a same model may be the same, M-values of electronic devices of different models may be different, or M-values corresponding to different cameras on a same electronic device may be different. This can ensure that a primary area including the object B can be obtained from all images captured by different electronic devices or different cameras.

A value of M is set based on the empirical value, to ensure that the electronic device finds an accurate primary area. This can not only ensure integrity of the object B in the primary area, but also avoid excessive extension of a range, to ensure effect of subsequent fitting.

In some implementations, M may be one value or a group of values. When M is a group of values, values in the group of values may be different. To be specific, the electronic device 100 may perform extension around different locations by different distances by using the object B as a reference, to obtain the primary area including the object B.

For example, refer to (b) in FIG. 6A and FIG. 6B, an area enclosed by dashed lines is a possible primary area including the object B. In FIG. 6A and FIG. 6B, sizes and locations of content included in images captured by cameras may be different.

In some other implementations, the primary area may be an area, in the image captured by the camera, that is obtained through extension toward a surrounding area by using the object B as a reference and that has a color or a pixel similar to or same as a color or a pixel of the object B.

**Step 3:** Perform correlation search on the primary area in the first picture, to find a co-location area with a correlation greater than a second value.

Specifically, performing correlation search on the primary area in the first picture means: first finding a background area, other than the primary area, in the image captured by the camera; and then recognizing, in the first picture, an area whose correlation with the background area is greater than the second value and/or an area with a highest correlation, where a remaining part in the first picture other than the area is the co-location area. This is equivalent to that a correlation between a remaining part, other than the co-location area, in the first picture and a remaining part, other than the primary area, in the image captured by the camera is greater than the second value. The second value may be preset. This is not limited in this embodiment of this application.

A size, a shape, and a location of the co-location area in the first picture are not limited in this application. A location, in the first picture, of the co-location area in the first picture is the same as a location, in the image captured by the camera, of the primary area that is in the image and that includes the object B. In this way, a relative location between the objectA and the object B displayed by the electronic device 100 to the user in the preview frame is the same as a relative location between the object A and the object B in the composite image obtained through fitting. In this way, the user can adjust group photographing effect in real time based on content in the preview frame. In some implementations, a size or a shape of the co-location area in the first picture may be the same as or different from a size or a shape of the primary area that is in the image captured by the camera and that includes the object B.

For example, refer to (b) and (c) in FIG. 6A, a size, a shape, and a location of the co-location area in the first picture are the same as those of the primary area in the image captured by the camera.

For example, refer to (b) and (c) in FIG. 6B. A shape and a location of the co-location area in the first picture are the same as those of the primary area in the image captured by the camera, and a size of the co-location area in the first picture is greater than a size of the primary area in the image captured by the camera.

In step 3, the electronic device 100 being capable of finding, in the first picture, a co-location area corresponding to the primary area indicates that a geographical location at which the first picture is captured is the same as or similar to a geographical location at which the electronic device 100 currently captures an image. In this way, group photographing at a same place or similar places is implemented. In addition, at a same place or similar places, light and a background in the first picture are similar to light and a background in the image captured by the camera. This can greatly improve fitting effect in subsequent step 4, to achieve good group photographing effect. In this way, the image shooting method provided in embodiments of this application is different from group photographing simply implemented through image matting. In the method, more natural group photographing effect can be achieved.

In some implementations, if the electronic device 100 immediately responds to the second operation when receiving the second operation after displaying the second user interface, step 3 may fail due to uncertainty of an image currently captured by the camera, to be specific, the electronic device 100 cannot find a corresponding co-location area in the first picture. In this case, the electronic device 100 may output prompt information to notify the user that current composition fails.

Step 4: Fit the primary area into the co-location area in the first picture while keeping a remaining area in the first picture unchanged, to generate the composite image.

Specifically, the electronic device may perform zoom-in or zoom-out on the primary area that is captured by the camera and that includes the object B, and then fuse the primary area into the co-location area in the first picture, and perform transitional smoothing on a fusion boundary. This is equivalent to that the electronic device replaces the co-location area in the first picture with a zoomed-in or zoomed-out primary area or a raw primary area, and then needs to perform transitional smoothing on a boundary between the primary area and the first picture, to make a final composite image look natural.

For example, refer to FIG. 6A. If a size of the co-location area is the same as a size of the primary area, the electronic device 100 replaces a co-location area in (c) with the primary area, and performs transitional smoothing on a boundary, to generate a composite image shown in (d).

For example, refer to FIG. 6B. The electronic device 100 performs zoom-in on the primary area, replaces a co-location area in (c) with a zoomed-in primary area, and performs transitional smoothing on a boundary, to generate a composite image shown in (d).

In the foregoing steps 1 to 4, the object B can be smoothly and naturally blended into the first picture including the object A, to generate a composite object including both the objectA and the object B, and achieve natural and high-quality group photographing effect.

When performing S104 and S105 in the Photo mode, the electronic device 100 may fit the first picture and an image captured at a moment at which a photographing instruction is received, to generate the composite image. In some other implementations, the electronic device 100 may store, in real time, N frames of images captured by the camera 193 at a moment at which a photographing instruction is received and an earlier moment, and separately fit the N frames of images and the first picture to generate N frames of composite images.

When performing S104 and S105 in the Video mode, the electronic device 100 may separately fit the first image and a plurality of frames of images captured by the camera 193 at a moment at which a video recording instruction is received to a moment at which a video recording stop instruction is received, to generate a plurality of frames of composite images.

In the foregoing process, a relative location between the object A and the object B during group photographing is displayed to the user on the preview interface in an overlay display manner, and a fitting operation is performed on the first picture and the image captured by the camera only after the first operation is received. In this manner, power consumption and a processing capability of the electronic device can be saved.

**S106: The electronic device 100 stores the composite image.**

If the electronic device 100 performs S104 and S105 in the Photo mode and fits only the image captured at the moment at which the photographing instruction is received and the first picture to generate the composite image, the electronic device 100 may store the generated frame of composite image in the memory in a picture format. If the electronic device separately fits the first picture and the N frames of images captured by the camera 193 at the moment at which the photographing instruction is received and the earlier moment to generate the N frames of composite images, the electronic device 100 may select a frame with best quality from the N frames of composite images, and store the frame in the memory in a picture format. Herein, the electronic device 100 may select one frame of image with best quality from the N frames of composite images through artificial intelligence learning. Quality of the composite image may be evaluated by using, but not limited to, any one or more of the following parameters: a peak signal-to-noise ratio (peak signal-to-noise ratio, PSNR), a mean square error (mean square error, MSE), a mean absolute error (mean absolute error, MAE), and a signal-to-noise ratio (signal-to-noise ratio, SNR).

In some other implementations, if the electronic device 100 performs S104 and S105 in the Photo mode and the electronic device separately fits the first picture and the N frames of images captured by the camera 193 at the moment at which the photographing instruction is received and the earlier moment to generate the N frames of composite images, the user may select a satisfactory composite image from the N frames of composite images, store the satisfactory composite image in the memory, and delete a remaining composite image.

In the foregoing implementation, the composite image (namely, a composite picture) retained by the electronic device 100 when performing S104 to S106 in the Photo mode may also be referred to as a second picture.

If the electronic device 100 performs S104 and S105 in the Video mode, the plurality of frames of composite images generated by separately fitting the first image and the plurality of frames of images captured by the camera 193, which is a video recording component, may be stored in the memory in a video format. That is, the plurality of frames of composite images are saved as a video file.

After the electronic device 100 stores the composite image, the composite image may be viewed, or editing, moving, sharing, or other operations may be performed on the composite image. An operation for viewing the composite image may also be referred to as a third operation.

For example, refer to FIG. 4A and FIG. 4B. The electronic device 100 generates a composite image in the Photo mode, and a thumbnail 207b of the composite image is displayed in the picture area 207, shown in FIG. 4B, that is provided by the gallery application. After receiving a user operation performed on the thumbnail 207b, the electronic device 100 may display a raw image, shown in FIG. 4B, of the thumbnail 207b, namely, the composite image generated by the electronic device 100.

In some implementations, after generating the composite image, the electronic device 100 may further perform the image shooting method in S101 to S106 for one or more times by using the composite object as the first picture. In this way, a plurality of times of group photographing can be implemented. For example, a same user may first use a photo of the user as the first picture, and then take a plurality of group photos with the user in the first picture. In this way, a plurality of group photos of a same person at a same place are taken.

In some implementations, if the first picture is an old photo of a family member that was taken many years ago, according to the image shooting method in S101 to S106, a group photo of the user and the family member of the user may be taken across time and space at a same place and at different time.

In step 1 to step 4 that are specifically included in S105, the electronic device 100 specifically fits, into the first picture, an area, in which the object B is located, in the image captured by the camera 193, to obtain the composite image. In addition, in some other implementations of this application, the electronic device 100 may alternatively fit, into the image captured by the camera 193, an area, in which the object A is located, in the first image, to obtain the composite image. Specifically, this implementation may include the following steps.

Step 1: Recognize an object in the first picture, where the object may be referred to as the object A.

Step 2: Determine, by using the object A as a reference, a primary area including the objectA from the first picture.

Step 3: Perform correlation search on the primary area in the image captured by the camera, to find a co-location area with a correlation greater than a second value.

Step 4: Fit the primary area into a co-location area in the image captured by the camera while keeping a remaining area in the image captured by the camera unchanged, to generate the composite image.

For specific implementations of the foregoing steps, refer to the implementations of the steps in S105. Details are not described herein again.

In the foregoing implementation, an area, in which the object A is located, in the first image is fitted into the image captured by the camera 193, to obtain the composite image. If the first picture is an old photo, an object in the old photo may be extracted and blended into a newly captured image, to renovate the old photo.

In the foregoing implementation of this application, the object A in the first picture may also be referred to as a first object, and the object B in the image captured by the camera may also be referred to as a second object.

In the image shooting method shown in FIG. 5, the electronic device 100 first displays, on the preview interface in an overlay manner, the first picture and the image captured by the camera, and then generates the composite image after receiving the first operation. In addition, in some other implementations of this application, after starting the camera application, the electronic device 100 may directly perform an operation of generating a composite image through fitting, and directly display the composite image on the preview interface. Specifically, after performing S101 to S103 in the foregoing method, the electronic device 100 starts the camera application, and captures an image in real time through the camera 193. The electronic device 100 separately fits the first picture and each frame of image captured by the camera 193 in real time, to obtain a plurality of frames of composite images, and displays the plurality of frames of composite images in the preview frame on the preview interface (namely, the second user interface) in chronological order. Then, if a photographing instruction is received, a composite image displayed in the preview frame is saved as a picture; or if a video recording instruction is received, a plurality of frames of composite images displayed in the preview frame during video recording are saved as a video. In this manner of performing composition in real time and displaying a composite image in real time, the electronic device 100 needs to have a strong processing capability. In this manner, group photographing effect can be displayed to the user in the preview frame in real time, so that the user can more intuitively feel the group photographing effect.

It should be understood that the steps in the foregoing method embodiments may be performed by an integrated logic circuit of hardware in the processor or by using instructions in a form of software. The steps of the methods disclosed with reference to embodiments of this application may be directly performed by a hardware processor, or may be performed by hardware in a processor in combination with a software module.

This application further provides an electronic device. The electronic device may include a memory and a processor. The memory may be configured to store a computer program. The processor may be configured to invoke the computer program in the memory, to enable the electronic device to perform the method performed by the electronic device 100 in any one of the foregoing embodiments.

This application further provides a chip system. The chip system includes at least one processor, configured to implement functions related to the electronic device 100 in any one of the foregoing embodiments.

In a possible design, the chip system further includes a memory. The memory is configured to store program instructions and data, and the memory is located inside or outside the processor.

The chip system may include a chip, or may include a chip and another discrete component.

Optionally, the chip system may include one or more processors. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory.

Optionally, the chip system may also include one or more memories. The memory may be integrated with the processor, or may be disposed separately from the processor. This is not limited in this embodiment of this application. For example, the memory may be a non-transitory processor, for example, a read-only memory ROM. The memory and the processor may be integrated into one chip, or may be separately disposed on different chips. A type of the memory and a manner of disposing the memory and the processor are not specifically limited in this embodiment of this application.

For example, the chip system may be a field programmable gate array (field programmable gate array, FPGA), an application-specific integrated circuit (application-specific integrated circuit, ASIC), a system-on-a-chip (system-on-a-chip, SoC), a central processing unit (central processing unit, CPU), a network processor (network processor, NP), a digital signal processing circuit (digital signal processor, DSP), a microcontroller unit (microcontroller unit, MCU), a programmable controller (programmable logic device, PLD), or another integrated chip.

This application further provides a computer program product. The computer program product includes a computer program (which may also be referred to as code or instructions). When the computer program is run, a computer is enabled to perform the method performed by the electronic device 100 in any one of the foregoing embodiments.

This application further provides a computer-readable storage medium. The computer-readable storage medium stores a computer program (which may also be referred to as code or instructions). When the computer program is run, a computer is enabled to perform the method performed by the electronic device 100 in any one of the foregoing embodiments.

Implementations of this application may be combined in any manner to achieve different technical effect.

All or some of the foregoing embodiments may be implemented by software, hardware, firmware, or any combination thereof. When the embodiments are implemented by software, all or some of the embodiments may be implemented in a form of a computer program product. The computer program product includes one or more computer instructions. When the computer program instructions are loaded and executed on a computer, all or some of the processes or the functions according to this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

A person of ordinary skill in the art can understand that all or some of the processes of the methods in the foregoing embodiments may be implemented by a computer program instructing related hardware. The program may be stored in a computer-readable storage medium. When the program is executed, the processes of the foregoing method embodiments are performed. The foregoing storage medium includes any medium that can store program code, for example, a ROM, a random access memory RAM, a magnetic disk, or a compact disc.

To sum up, the foregoing descriptions are merely embodiments of the technical solutions of this application, but are not intended to limit the protection scope of this application. Any modification, equivalent replacement, improvement, or the like made based on the disclosure of this application shall fall within the protection scope of this application.

## Claims

1. An image shooting method, wherein the method comprises:
starting, by an electronic device, a gallery application, and displaying a first user interface, wherein a first picture is displayed on the first user interface, and the first picture comprises a first object;
receiving, by the electronic device, a first operation for the first picture;
starting, by the electronic device, a camera application, and displaying a second user interface, wherein a preview frame is displayed on the second user interface, and an image captured by a camera of the electronic device and indication information of the first picture are displayed in the preview frame;
receiving, by the electronic device, a second operation for photographing; and
storing, by the electronic device, a second picture, wherein the second picture is obtained by fitting the image captured by the camera and the first picture, the image captured by the camera comprises a second object, and the second picture comprises the first object and the second object.

2. The method according to claim 1, wherein before the electronic device stores the second picture after receiving the second operation, the method further comprises:
recognizing, by the electronic device, the second object in the image captured by the camera;
determining, in the image captured by the camera, a primary area comprising the second object, wherein the primary area is an area determined by using the second object as a reference;
determining a co-location area in the first picture, wherein a correlation between a part in the first picture other than the co-location area and a part in the image captured by the camera other than the primary area is greater than a second value; and
fitting the primary area to the co-location area in the first picture to obtain the second picture.

3. The method according to claim 1, wherein before the electronic device stores the second picture after receiving the second operation, the method further comprises:
recognizing, by the electronic device, the first object in the first picture;
determining, in the first picture, a primary area comprising the first object, wherein the primary area is an area determined by using the first object as a reference;
determining a co-location area in the image captured by the camera, wherein a correlation between a part in the image captured by the camera other than the co-location area and a part in the first picture other than the primary area is greater than a second value; and
fitting the primary area to the co-location area in the image captured by the camera to obtain the second picture.

4. The method according to claim 2 or 3, wherein a location of the co-location area in the first picture is the same as a location of the primary area in the image captured by the camera.

5. The method according to claim 1, wherein
the second picture is a frame of image with highest quality among composite images obtained by separately fitting a plurality of frames of images captured by the camera and the first picture, the plurality of frames of images captured by the camera comprise images captured by the camera at a moment at which the electronic device receives the second operation and an earlier moment, and a quantity of the plurality of frames of images is preset by the electronic device.

6. The method according to any one of claims 1 to 5, wherein a first control is displayed on the first user interface, and before the electronic device receives the first operation for the first picture, the method further comprises:
receiving, by the electronic device, a user operation performed on the first control; and
displaying, by the electronic device, a second control on the first user interface, wherein the first operation comprises a user operation performed on the second control.

7. The method according to any one of claims 1 to 6, wherein after the electronic device stores the second picture, the method further comprises:
receiving, by the electronic device, a third operation for viewing the second picture; and
displaying, by the electronic device, the second picture.

8. An image shooting method, wherein the method comprises:
starting, by an electronic device, a gallery application, and displaying a first user interface, wherein a first picture is displayed on the first user interface, and the first picture comprises a first object;
receiving, by the electronic device, a first operation for the first picture;
starting, by the electronic device, a camera application, and displaying a second user interface, wherein a preview frame is displayed on the second user interface, a composite image is displayed in the preview frame, the composite image is obtained by fitting an image captured by a camera of the electronic device and the first picture, and the image captured by the camera comprises a second object;
receiving, by the electronic device, a second operation for photographing; and
storing, by the electronic device, a second picture, wherein the second picture is a composite image displayed in the preview frame when the second operation is received, and the second picture comprises the first object and the second object.

9. The method according to claim 8, wherein before the electronic device displays the composite image in the preview frame, the method further comprises:
recognizing, by the electronic device, the second object in the image captured by the camera;
determining, in the image captured by the camera, a primary area comprising the second object, wherein the primary area is an area determined by using the second object as a reference;
determining a co-location area in the first picture, wherein a correlation between a part in the first picture other than the co-location area and a part in the image captured by the camera other than the primary area is greater than a second value; and
fitting the primary area to the co-location area in the first picture to obtain the composite image.

10. The method according to claim 8, wherein before the electronic device displays the composite image in the preview frame, the method further comprises:
recognizing, by the electronic device, the first object in the first picture;
determining, in the first picture, a primary area comprising the first object, wherein the primary area is an area determined by using the first object as a reference;
determining a co-location area in the image captured by the camera, wherein a correlation between a part in the image captured by the camera other than the co-location area and a part in the first picture other than the primary area is greater than a second value; and
fitting the primary area to the co-location area in the image captured by the camera to obtain the composite image.

11. The method according to claim 9 or 10, wherein a location of the co-location area in the first picture is the same as a location of the primary area in the image captured by the camera.

12. The method according to any one of claims 8 to 11, wherein a first control is displayed on the first user interface, and before the electronic device receives the first operation for the first picture, the method further comprises:
receiving, by the electronic device, a user operation performed on the first control; and
displaying, by the electronic device, a second control on the first user interface, wherein the first operation comprises a user operation performed on the second control.

13. The method according to any one of claims 8 to 12, wherein after the electronic device stores the second picture, the method further comprises:
receiving, by the electronic device, a third operation for viewing the second picture; and
displaying, by the electronic device, the second picture.

14. An image shooting method, wherein the method comprises:
displaying, by an electronic device, a second user interface, wherein a preview frame and a third control are displayed on the second user interface, and an image captured by a camera of the electronic device is displayed in the preview frame;
detecting, by the electronic device, a fourth operation performed on the third control;
displaying, by the electronic device, one or more pictures;
detecting, by the electronic device, a fifth operation performed on a first picture of the one or more pictures, wherein the first picture comprises a first object;
displaying, by the electronic device in the preview frame on the second user interface, the image captured by the camera of the electronic device and indication information of the first picture;
receiving, by the electronic device, a second operation for photographing; and
storing, by the electronic device, a second picture, wherein the second picture is obtained by fitting the image captured by the camera and the first picture, the image captured by the camera comprises a second object, and the second picture comprises the first object and the second object.

15. The method according to claim 14, wherein before the electronic device stores the second picture after receiving the second operation, the method further comprises:
recognizing, by the electronic device, the second object in the image captured by the camera;
determining, in the image captured by the camera, a primary area comprising the second object, wherein the primary area is an area determined by using the second object as a reference;
determining a co-location area in the first picture, wherein a correlation between a part in the first picture other than the co-location area and a part in the image captured by the camera other than the primary area is greater than a second value; and
fitting the primary area to the co-location area in the first picture to obtain the second picture.

16. The method according to claim 14, wherein before the electronic device stores the second picture after receiving the second operation, the method further comprises:
recognizing, by the electronic device, the first object in the first picture;
determining, in the first picture, a primary area comprising the first object, wherein the primary area is an area determined by using the first object as a reference;
determining a co-location area in the image captured by the camera, wherein a correlation between a part in the image captured by the camera other than the co-location area and a part in the first picture other than the primary area is greater than a second value; and
fitting the primary area to the co-location area in the image captured by the camera to obtain the second picture.

17. The method according to claim 15 or 16, wherein a location of the co-location area in the first picture is the same as a location of the primary area in the image captured by the camera.

18. The method according to claim 14, wherein
the second picture is a frame of image with highest quality among composite images obtained by separately fitting a plurality of frames of images captured by the camera and the first picture, the plurality of frames of images captured by the camera comprise images captured by the camera at a moment at which the electronic device receives the second operation and an earlier moment, and a quantity of the plurality of frames of images is preset by the electronic device.

19. The method according to any one of claims 15 to 18, wherein after the electronic device stores the second picture, the method further comprises:
receiving, by the electronic device, a third operation for viewing the second picture; and
displaying, by the electronic device, the second picture.

20. An image shooting method, wherein the method comprises:
displaying, by an electronic device, a second user interface, wherein a preview frame and a third control are displayed on the second user interface, and an image captured by a camera of the electronic device is displayed in the preview frame;
detecting, by the electronic device, a fourth operation performed on the third control;
displaying, by the electronic device, one or more pictures;
detecting, by the electronic device, a fifth operation performed on a first picture of the one or more pictures, wherein the first picture comprises a first object;
displaying, by the electronic device, a composite image in the preview frame on the second user interface, wherein the composite image is obtained by fitting the image captured by the camera of the electronic device and the first picture, and the image captured by the camera comprises a second object;
receiving, by the electronic device, a second operation for photographing; and
storing, by the electronic device, a second picture, wherein the second picture is a composite image displayed in the preview frame when the second operation is received, and the second picture comprises the first object and the second object.

21. The method according to claim 20, wherein before the electronic device displays the composite image in the preview frame, the method further comprises:
recognizing, by the electronic device, the second object in the image captured by the camera;
determining, in the image captured by the camera, a primary area comprising the second object, wherein the primary area is an area determined by using the second object as a reference;
determining a co-location area in the first picture, wherein a correlation between a part in the first picture other than the co-location area and a part in the image captured by the camera other than the primary area is greater than a second value; and
fitting the primary area to the co-location area in the first picture to obtain the composite image.

22. The method according to claim 20, wherein before the electronic device displays the composite image in the preview frame, the method further comprises:
recognizing, by the electronic device, the first object in the first picture;
determining, in the first picture, a primary area comprising the first object, wherein the primary area is an area determined by using the first object as a reference;
determining a co-location area in the image captured by the camera, wherein a correlation between a part in the image captured by the camera other than the co-location area and a part in the first picture other than the primary area is greater than a second value; and
fitting the primary area to the co-location area in the image captured by the camera to obtain the composite image.

23. The method according to claim 21 or 22, wherein a location of the co-location area in the first picture is the same as a location of the primary area in the image captured by the camera.

24. The method according to any one of claims 20 to 23, wherein after the electronic device stores the second picture, the method further comprises:
receiving, by the electronic device, a third operation for viewing the second picture; and
displaying, by the electronic device, the second picture.

25. An electronic device, wherein the electronic device comprises a memory and one or more processors, the memory is coupled to the one or more processors, the memory is configured to store computer program code, the computer program code comprises computer instructions, and the one or more processors invokes/invoke the computer instructions to enable the electronic device to perform the method according to any one of claims 1 to 7, claims 8 to 13, claims 14 to 19, or claims 20 to 24.

26. A computer-readable storage medium, comprising instructions, wherein when the instructions are run on an electronic device, the electronic device is enabled to perform the method according to any one of claims 1 to 7, claims 8 to 13, claims 14 to 19, or claims 20 to 24.

27. A computer program product, wherein the computer program product comprises computer instructions, and when the computer instructions are run on an electronic device, the electronic device is enabled to perform the method according to any one of claims 1 to 7, claims 8 to 13, claims 14 to 19, or claims 20 to 24.
